# EUROPEAN PATENT SPECIFICATION

(11) **EP 2 002 058 B1**
(45) Date of publication and mention of the grant of the patent: **13.06.2012**
(21) Application number: 07723715.4
(22) Date of filing: 28.03.2007
(51) Int. Cl.: D21H 27/00, A47K 10/00

(54) **LATHER-FORMING TISSUE PAPER PRODUCT**
SCHAUMBILDENDES TISSUEPAPIERPRODUKT
PRODUIT EN PAPIER-TISSU FORMANT UNE MOUSSE

(30) Priority: 01.04.2006 WO PCT/EP2006/003001
(43) Date of publication of application: 17.12.2008
(73) Proprietor: SCA Hygiene Products GmbH, 68305 Mannheim (DE)
(72) Inventor: CORDIAL, Lesley, 80797 München (DE); DREWES-MAGDANZ, Paul, 85356 Freising (DE); MAULER, Dirk, 68549 Ilvesheim (DE); STEUER, Heiko, 65452 Gustavsburg (DE); SCHINKOREIT, Wolfram, 69483 Wald-Michelbach (DE)
(74) Representative: HOFFMANN EITLE
(86) International application number: PCT/EP2007/002771
(87) International publication number: WO 2007/112916

(56) References cited:
- WO-A-99/13861
- WO-A-03/054132

## Description

The present invention concerns a dry tissue paper product, in particular a dry tissue paper product capable of producing lather, a process for its manufacture, a method for cleaning a hard surface using the same and its use for cleaning hard surfaces.

### TECHNICAL BACKGROUND

Aqueous-based cleansers for hard surfaces such as windows, mirrors and reflecting surfaces are well known in the art. US 4,343,725 discloses for instance such a cleanser comprising a mixture of water-soluble nonionic polyoxyethylene glycol polymer and at least one water-soluble surface active compound. It is taught that a diluted solution of these cleansers can be applied on glass surfaces by means of a sponge or cloth, or can be sprayed directly on the surface by means of a spray pump and be wiped off immediately with a chamois, a rubber squeegee, a wipe, a cloth or a paper towel. This is a rather cumbersome procedure and it would be desirable to provide an efficient cleansing system where dilution and dosage steps are omitted or simplified and the carrier of the cleansing composition itself could act as wipe.

Wet wipes are equally known in the art. Commercially available wet wipes intended for personal care typically comprise nonwoven substrates on the basis of synthetic fibers which are impregnated with cleansing, cosmetic or dermatologic compositions. Wet wipes of this type are also disclosed in WO 03/000219 A1, EP 1 222 915 A2, EP 1 210 928 A1, EP 0 058 633 A1 and US 4,448,704. US 6,730,621 B2 discloses a wet wipe belonging to the same product category and being referred to as "disposable substantially damp cleansing article". The cleansing article is discussed in connection with personal cleansing and conditioning products and has a cleansing composition impregnated onto a flexible substrate such as a nonwoven cloth. The impregnated compositions include lathering surfactants and water. WO 03/054132 A1 relates to an oil-absorbing cleaning tissue (dry or wet) having a polymer-surfactant complex, where the term "tissue" includes however numerous non-paper materials. Moreover, this document does neither relate to dry tissue paper wipes nor is it taught that the surfactant develops lather. CN 1073492 A also discloses a wet paper article for cleaning hard surfaces, though in view of the polishing effect to be achieved the liquid composition contains wax as essential component. Wet wipes are also disclosed in JP 1168999 A, US 6,750,160 B1, EP 0 099 209 A and EP 0 799 568 A1 while the latter two documents emphasize the disinfectant character of the cleaning composition impregnated therein. US 2002/0029984 A1 discloses a wet toilet seat wipe comprising a disinfectant cleaning solution comprising a quick-drying alcohol.

One major disadvantage of wet wipes resides in the need to provide a moisture tight package. Otherwise, the wet wipe would dry out and loose its effectiveness. Moreover, due to their content of synthetic fibers, nonwoven substrates typically used in wet wipes are not or only slowly biodegradable, and they show inferior flushability and disintegration, e.g. when disposed into a toilet or a sewage system. Nonwovens based on synthetic fibers moreover render it more difficult to provide the wipe in the form of rolls where the single sheets are separated by perforations or in the form of folded sheets since synthetic fibers show a much higher resistance to folding, cutting or perforation steps. In addition, nonwovens are much more expensive than tissue paper products.

Nonwovens and other thermoplastic non-paper layers are also used in the wipes of US 4,600,620, US 2003/0104750 A1 and US 2003/0104966 which all mention that the wipe can be used for cleaning hard surfaces. Some wipes for cleaning hard surfaces (e.g. US 2005/0129897, US 2002/0132747) also include abrasive materials or layers which are typically made from a web of thermoplastic fibers.

The aforementioned drawbacks also apply to nonwoven substrates based on synthetic fibers as used in dry wipes for personal care. WO 99/013861 discloses for instance a disposable, singe use personal care cleansing and conditioning article comprising
A) a water-insoluble substrate, wherein at least a first portion is wet extensible and at least a second portion is less wet extensible than said first portion, and
B) at least one lathering surfactant added onto or impregnated into said substrate.

A similar substantially dry cleansing article with a lathering surfactant is described in WO 99/12519. A lathering surfactant is also mentioned in US 2002/0013109 which discloses a two-ply disposable article comprising a nonwoven ply. There exists also a series of patent applications in the name of Procter & Gamble including WO 96/14835 relating to a water-insoluble carrier for a solid emulsion comprising a continuous lipid phase with a high melting waxy material deposited onto the wipe substrate. The material is intended to be sufficiently brittle so as to be easily disrupted by low shear contact (for instance during wiping of the skin) to readily release an internal skin conditioning phase. Yet it is stated in the art (US 6,391,835 B1) that the continuous external lipid phase is neither sufficiently robust for processing and handling nor sufficiently releasable under cleaning conditions.

US 6,391,835 B1 discloses a disposable substantially dry cleansing article having a lathering surfactant and a C6-C12 alkyl diol impregnated into flexible substrate. As examples for the insoluble substrate, this document mentions nonwoven substrates, woven substrates, hydro-entangled substrates and air entangled substrates. This article is referred to as personal cleansing and conditioning product which should gently cleanse the skin or hair, cause little or no irritation and not leave the skin or hair overly dry after frequent use.

A similar disposable substantially dry foamable product and its use in personal cleansing and conditioning of skin or hair is disclosed in US 6,491,937 B1.

US 5,213,884 relates to a tissue suitable for use in the disinfection of hard surfaces, etc. wherein the tissue plies are bound together with an adhesive polymer mixed with solid particles comprising a chlorine release agent. Although the use of surfactant in combination with the chlorine release agent is mentioned in this document, it is not taught to apply the same in a form and an amount entailing lather formation.

US 2004/0031107 A1 relates to a cleaning material for dry cleaning hard surfaces and textile products in the form of a planar-like structure with host substances such as cyclodextrins applied wherein said host substances may contain and release one or more active components such as surfactants. This document does not relate to tissue paper subtrates. Moreover, the use of host substances makes the manufacture of this cleaning material complicated and expensive which is to be avoided in line with the present invention.

FR 2 538 238 A discloses a cleaning sheet or web comprising a substrate impregnated with a mixture of surface active agent and fatty component and/or polyol in an amount that the substrate remains dry. This cleaning sheet does not require water for cleaning hard surfaces, apparently due to the use of relatively high polyol/surfactant ratios in the impregnating composition. According to example 1, the impregnated serviette contained 37.4 wt.-% of the cleaning composition which is undesirably high for economic reasons. Moreover, since water is not required for cleaning, nothing is said about the capability of the surfactants to form lather.

DE 20 2004 003 519 U1 describes in very general terms a dry paper product containing washing, cleaning, personal hygiene or disinfecting compositions.

WO 99/13861 relates to a disposable, single use personal care cleansing and conditioning article for skin or hair. It is substantially dry prior to use and comprises a water insoluble substrate and at least one lathering surfactant added onto or impregnated into the substrate. At least a first portion of the substrate is wet extensible and at least a second portion of the substrate is less wet extensible than the first portion.

In view of this prior art it is one object of the present invention to provide an economic tissue paper product suitable for efficiently wiping hard surfaces such as furniture, kitchen appliance, windows etc.

One further object of the present invention resides in providing a disposable and degradable tissue paper product which has an excellent shelf life.

One further object of the present invention involves providing a tissue paper product showing sufficient mechanical strength during wiping, preferably with as little substrate material as possible. Moreover, it would be desirable that the tissue paper product shows at least sufficient bulk and thickness values, even if a cleaning composition has been added thereto.

One further technical object of the invention is to provide a tissue paper product that does not require moisture tight packaging or wrapping materials.

It is one further technical object to provide such a tissue paper product having an excellent cleaning effect.

According to one further technical object, the tissue paper product should be made from a material that can be dispensed in a roll of single sheets separated by perforations; or in the form of folded sheets or stacked sheets.

It is moreover one technical object of the present invention to provide a process for the manufacture of such tissue paper products, their use for cleaning hard surfaces and a cleaning process utilizing these wipes.

Further objects will become apparent from the following detailed description of the invention.

### BRIEF SUMMARY OF THE INVENTION

The present invention relates to a disposable tissue paper product which feels dry to the touch and comprises a lathering surfactant in a form capable of forming lather upon contact with water, wherein
said tissue paper product is obtainable by applying said lathering surfactant or a composition containing said lathering surfactant to one or more plies of dry tissue paper web,
the lathering surfactant is present in an amount of 0.01 to 6 g/m², and,
if a composition containing the lathering surfactant is applied, the total amount of non-volatile components of said composition does not exceed 20 wt.-% of the dry weight of said one or more tissue paper plies,
wherein one or more tissue paper plies of the tissue paper product were subjected to a through air drying (TAD) step, and wherein said tissue paper product has two or more tissue paper plies.

The present invention also relates to a process for the manufacture of a disposable tissue paper product as defined above comprising the step of applying a lathering surfactant or a composition containing the same to at least one surface of one or more plies of a dry tissue paper web and a process for the manufacture of a disposable tissue paper product which feels dry to the touch and comprises a lathering surfactant, said process comprising the step of applying an aqueous composition comprising a lathering surfactant to a moving tissue paper web by means of a slot die.

Further, the present invention pertains to the use of the aforementioned tissue paper product for cleaning a hard surface and a process for cleaning a hard surface comprising the steps of wetting this tissue paper product with water and wiping over the hard surface.

### DESCRIPTION OF THE FIGURES

Figure 1 shows one embodiment of an application process according to the invention wherein a liquid composition comprising a lathering surfactant is applied by means of slot die device (2) onto tissue web (1).
Figure 2 shows slot die (9), application lip (10), valve section (11) and adjustable rack (12) of a slot die device usable in the present invention.
Figure 3 shows various process parameters regarding the application of a liquid composition comprising a lathering surfactant onto tissue web (1) by means of slot die device (2).

### DETAILED DESCRIPTION OF THE INVENTION

The present invention relates to a disposable tissue paper product which feels dry to the touch and comprises a lathering surfactant in a form capable of forming lather (to be understood as synonymous to "foam") upon contact with water. The lather is typically formed during the wiping movement which involves the mechanical agitation of lathering surfactant and water in the presence of air. The lather formation contributes to the excellent cleaning effect achieved with the present invention. The term "in a form capable of forming lather" means that the lathering surfactant is accessible for water added to the tissue paper product. This may not be the case if the lathering surfactant is enclosed by materials having a barrier function, for instance a continuous oil phase in W/O emulsions. How this accessibility can be achieved is Known in the art.

To achieve the dry feel the water content of this tissue paper product should preferably not exceed 15 wt.-%. More preferred water contents are 12 wt.-% or less, more preferably 10 wt.-% or less, in particular 9 wt.-% or less, or 8 wt.-% or less. The water content is preferably measured according to the industrial standard DIN 54540-9.

The term "tissue paper product" is used for products made from (raw) tissue paper webs. Based on the underlying compatibility of production processes (wet laying of fiber mixtures), "tissue" production is counted among the papermaking techniques. The production of tissue is distinguished from the paper production by its lower basis weight and its much higher tensile energy absorption index.

The tensile energy absorption index is arrived at from the tensile energy absorption in which the tensile energy absorption is related to the test sample volume before inspection (length, width, thickness of sample between the clamps before tensile load). Paper and tissue paper also differ in general with regard to the modulus of elasticity that characterizes the stress-strain properties of these planar products as a material parameter.

A tissue's high tensile energy absorption index results from the outer or inner creping. The former is produced by compression of the paper web adhering to a dry cylinder as a result of the action of a creping doctor blade. The inner creping results from a difference in speed between two wires ("fabrics"). This causes the still moist, plastically deformable paper web to be internally broken up by compression and shearing, thereby rendering it more stretchable under load than an uncreped paper. A high tensile energy absorption index can also be achieved by forming the dry or wet tissue into or imparting to the dry or wet tissue a 3D structure through the wires themselves. Most of the functional properties typical of tissue and tissue products result from the high tensile energy absorption index (see DIN EN 12625-4).

In line with the common understanding of the art, the term "tissue paper product" thus does not extend to multi-ply products that comprise plies not made from tissue paper, in particular plies from synthetic materials such as nonwoven plies. This ensures the enhanced degradability of the tissue paper product of the present invention.

The tissue paper product of the invention has two or more tissue paper plies, preferably 2 to 6 plies, for instance 3 or 4 plies. Each ply may be constituted by one, two or more layers. These layers can for instance differ in their fiber composition (long fibers, short fibers, origin of the fibers, etc.) or in the chemical treatment to which the corresponding fibers were subjected (softener, strength agents, etc.). These layers can be generated by supplying different slurries of papermaking fibers to multi-layered headboxes.

The one ply raw tissue paper used in the present invention preferably has a basis weight of 10 to 75 g/m², more preferably 14 to 30 g/m², in particular 15 to 25 g/m². The total basis weight of the one or more tissue webs prior to treatment with lathering surfactant preferably does not exceed 100 g/m², and is more preferably 20 to 80 g/m², in particular 25 to 75 g/m², for instance 30 to 70 g/m², or 35 to 60 g/m². The treatment with the lathering surfactant leads to an increase in thickness of the final product, e.g. of 10 to 30%, preferably 15 to 25%, and most preferably about 2.0% in relation to the total thickness of the one or more tissue webs prior to the treatment.

Among the plies constituting the tissue paper product, one or more plies, preferably all plies were subjected to a through air drying (TAD) step, as explained below in further detail in connection with tissue paper manufacture.

For multiply products it is preferred that two or more plies, in particular all plies are joined with each other through mechanical ply bonding means (*e.g*., embossing) and/or chemical ply bonding means. The structured surface resulting from embossing steps may have a positive impact on the cleaning efficiency. In the alternative, the plies of the multiply product do not adhere to each other.

The tissue paper product of the invention, and therefore also the individual plies thereof, contain as main fibrous component cellulosic fibers. To ensure the necessary flushability and/or degradability, the weight content of nondegradable, in particular synthetic fiber types should be kept as low as possible and preferably does not exceed the values of 20 wt.-% or 10 wt.-% with increasing preference. In one preferred embodiment of the invention, the fiber mixture(s) used for wet laying the raw tissue web of one or more, in particular all tissue plies consists solely of cellulosic fibers.

The cellulosic fibres to be used may be of regenerated type (e.g. Lyocell), although the use of other types of pulps is preferred. The pulps employed can be a primary fibrous material or a secondary fibrous material (recycled pulps). The pulp can stem from lignin-free or low lignin sources, such as cotton linters, esparto (alfa) grass, bagasse (e.g. cereal straw, rice straw, bamboo, or hemp), hemp fibres or flax. Preferably the pulp is produced from ligno-cellulosic material, such as softwood (which typically originates from conifers) or hardwood (typically from deciduous trees).

It is possible to use "chemical pulps" or "mechanical pulps", whereby the use of chemical pulps is preferred.

"Chemical pulps" are, according to DIN 6730, fibrous materials obtained from plant raw materials of which most non-cellulosic components have been removed by chemical pulping without substantial mechanical post treatment. "Mechanical pulp" is the general term for fibrous material made of wood entirely or almost entirely by mechanical means, optionally at increased temperatures. Mechanical pulp can be sub-divided into the purely mechanical pulps (groundwood pulp and refined mechanical pulp) as well as mechanical pulps subjected to chemical pre-treatment, such as chemo-mechanical pulp (CMP), or chemo-thermo mechanical pulp (CTMP).

In the present invention it is preferred to use chemical pulps as derived from sulfite or sulfate (Kraft) processes. These pulps can be derived from softwood or hardwood species as exemplified above.

In terms of bleaching the pulp, it is preferred to use chlorine-free bleaching steps in view of the production of environmentally sound products and process steps.

The above described cellulosic fiber materials could be used unrefined or refined (beaten). In the case of refining, a freeness level of about 17 to 35 "SR (according to DIN-ISO 5267/1, March 19, 1999)is normally applied to the long fiber fraction of the cellulose furnish and depending on the desired strength level of the final tissue web.

To enhance wet strength one or more plies, in particular all plies of the tissue paper product are preferably treated with a wet strength agent.

The wet strength agent is preferably added to the cellulosic fibers, for instance to a slurry of papermaking fibers conducted to the headbox, in such an amount, in terms of active substance, that 0.01 to 5 wt.-%, more preferably 0.01 to 3 wt.-%, in particular 0.5 to 2 wt.-%, based on the total amount of untreated cellulosic fibers are retained. If not stated otherwise, the amount of untreated cellulosic fibers refers to the dry weight thereof, as measured according to EN 20638:1993.

The wet strength agent is preferably a cationic polymer containing cationic groups, such as positively charged quaternary nitrogen atoms. The wet strength agent can be selected from, but is not limited to urea-formaldehyde resins, melamine-formaldehyde resins, polyvinylamine, polyureide-formaldehyde resins, glyoxal-acrylamide resins and cationic materials obtained by the reaction of polyalkylene polyamines with polysaccharides such as starch and various natural gums, as well as 3-hydroxyazetidinium ion-containing resins, which are obtained by reacting nitrogen-containing polymers with epichlorohydrine. The above materials are mentioned in US 3,998,690 where also references for their disclosure are found.

The most preferred type of cationic polymer is 3-hydroxy azetidinium ion-containing resins. They include, but are not limited to, neutral or alkaline-curing thermosetting wet strength resins which can be selected from polyaminoamide-epichlorohydrine resins, polyamine-epichlorohydrine resins and aminopolymer-epichlorohydrine resins. In this context, explicit reference is made to a more detailed description of these wet strength agents in the section from column 2, line 43 to column 3, line 23 of US 5,316,623. Examples of these are the well known kymene^{®} resins available from Hercules Inc. or EKA XP 4016 available from Eka Chemicals.

One or more, in particular all plies of the tissue paper product may also comprise a dry strength agent which is preferably added to the papermaking fibers in such an amount that 0.01 to 3 wt.-%, more preferably 0.1 to 2 wt.-%, based on the total amount of untreated cellusic fibers (dry weight according to EN 20638:1993) is retained by the fibers.

The dry strength agent is preferably a water-soluble anionic polymer. The water soluble anionic polymer is preferably selected from polycarboxylic acids and anhydrides such as starch-based polymers, (meth)acrylic acid-derived polymers and copolymers, maleic-anhydride-derived copolymers, vinyl copolymers of carboxylic acids and cellulose-based polymers. These can be further exemplified by polyacrylates, polymethacrylates, maleic anhydride-vinyl acetate polymers, polyvinylmethylether-maleic anhydride copolymers, methacrylic acid-acryl amide copolymers, isopropenyl acetate-maleic anhydride copolymers, itaconic acid-vinylacetate colpoymers, alpha-methyl styrene-maleic anhydride copolymers, styrene-maleic anhydride copolymers, methyl methacrylate-maleic anhydride copolymers, acrylic acid-styrene copolymers, carboxymethyl cellulose, succinic half esters of cellulose, graft polymerised polyacrylate-polyssacharide copolymers, succinic half esters of starch and oxidation products of the above-listed polyssacharides.

Preferably starch-based polymers, vinyl copolymers of carboxylic acids and cellulose-based polymers are used. Among these, the use of carboxyalkylated polysaccharides, in particular carboxyalkylated cellulose is most preferred.

The water-soluble carboxyalkylated polysaccharides include carboxymethyl cellulose (CMC), carboxymethyl hydroxycellulose (CMHEC), carboxymethyl hydroxypropylcellulose (CMHPC), carboxymethylguar (CMG), carboxymethylated locust bean gum, carboxymethyl starch and the like, and their alkali metal salts or ammonium salts.

Surprisingly, it was found that the incorporation of a lathering surfactant into a tissue paper product maintains the wet tensile strength while it improves the haptic properties (surface softness), thickness and compressibility which properties generally contribute to consumer acceptance. The lathering surfactant to be used in the present invention is not subject to any particular limitations. By a "lathering surfactant" is meant a surfactant, which when combined with water and mechanically agitated generates a foam or lather. Not all surfactants show this property. Suitable lathering surfactants are known in the art and described for instance in "McCutcheon's, Detergents and Emulsifiers, North American edition (1986)", published by allured Publishing Corporation; "McCutcheon's, Functional materials, North American Editor (1992)", US 3,929,678, WO 99/013861, US 6,391,835 other documents cited under "technical background", and the "Handbook of Industrial Surfactants" (Third Edition 2000) compiled by Michael and Irene Ash, Synapse Information Resources, Inc.

The tissue paper product of the invention comprises 0.01 to 6 g/m², preferably 0.01 to 3 g/m², more preferably 0.05 to 1 g/m² of one or more lathering surfactants. If a composition containing the lathering surfactant is applied, the total amount of non-volatile components of said composition preferably does not exceed 20 wt.-% of the raw tissue paper ply or plies (dry weight of ply or plies according to EN 20638:1993). More preferred upper limits are 15 wt.-% and 10 weight%, for instance also 8, 7, 6, 5, 4 or 3 wt.-%. "Non-volatile" components of the composition are those (e.g. lathering surfactant or water-binding agent) which cannot be removed under the drying conditions described in EN 20638:1993.

The lathering surfactant may be cationic but is preferably selected from anionic lathering surfactants, amphoteric lathering surfactants, nonionic lathering surfactants and mixtures thereof.

Among the anionic lathering surfactant useful herein are the following non-limiting examples which include the classes of:
(a1) Alkyl benzene sulfonates in which the alkyl group contains from 9 to 15 carbon atoms, preferably 11 to 14 carbon atoms in straight chain or branched chain configuration. One embodiment is a linear alkyl benzene sulfonate containing about 12 carbon atoms in the alkyl chain. Another preferred example is a linear' alkyl benzene sulfonate wherein the alkyl represents a mixture of C10 and C13 alkyl which is one component in Lumorol^{®} 4339 (Zschimmer & Schwarz, Germany).
(a2) Alkyl sufonates obtained by sulfating an alcohol having 8 to 22 carbon atoms, preferably 12 to 16 carbon atoms. The alkyl sulfates have the formula ROSO₃-M⁺ where R is the C₈₋₂₂ alkyl group and M is a mono- and/or divalent cation.
(a3) Paraffin sulfonates having 8 to 22 carbon atoms, preferably 12 to 16 carbon atoms, in the alkyl moiety . These surfactants are commercially available as Hostapur SAS from Hoechst Celanese.
(a4) Olefin sulfonates having 8 to 22 carbon atoms, preferably 12 to 16 carbon atoms. Most preferred is sodium C₁₄-C₁₆ olefin sulfonate, available as Bioterge AS 40^{®}.
(a5) Alkyl ether sulfates derived from an alcohol having 8 to 22 carbon atoms, preferably 12 to 16 carbon atoms, ethoxylated with less than 30, preferably less than 12 (e.g. 1 to 4 on average) moles of ethylene oxide. One embodiment is sodium lauryl ether sulfate formed from 2 moles average ethoxylation, commercially available as Standopol ES-2^{®}. One preferred embodiment are sodium (C10-C16)alkyl ether sulfates with preferably 1 to 4 moles of ethylene oxide on average which are present as one ingredient in Spülflott^{®} (Tillmann GmbH) and Lumorol^{®} 4339 and K5240 (Zschimmer & Schwarz, Germany).
(a6) Alkyl glyceryl ether sulfonates having 8 to 22 carbon atoms, preferably 12 to 16 carbon atoms, in the alkyl moiety.
(a7) Fatty acid ester sulfonates of the formula: R¹CH (SO₃M⁺) CO₂R² where R¹ is straight or branched alkyl from about C₈ to C₁₈, preferably C₁₂ to C₁₆, and R² is straight or branched alkyl from about C₁ to C₆, preferably primarily C₁, and M+ represents a mono- or divalent cation.
(a8) Secondary alcohol sulfates having 6 to 18, preferably 8 to 16 carbon atoms.
(a9) Fatty acyl isethionates having form 10 to 22 carbon atoms, with sodium cocoyl isethionate being preferred.
(a10) Dialkyl sulfosuccinates wherein the alkyl groups range from 3 to 20 carbon atoms each.
(a11) Alkanoyl sarcosinates corresponding to the formula RCON(CH₃)CH₂CH₂CO₂M wherein R is alkyl or alkenyl of about 10 to about 20 carbon atoms and M is a water-soluble cation such as ammonium, sodium, potassium and trialkanolammonium. Most preferred is sodium lauroyl sarcosinate.
(a12) Alkyl lactylates wherein the alkyl groups range from 8 to 12 carbon atoms, with sodium lauroyl lactylate sold as Pationic 138 C^{®} available from the Patterson Chemical Company as the most preferred.
(a13) Taurates having from 8 to 16 carbon atoms, with cocoyl methyl taurate being preferred.
(a14) Sulfosuccinates having a twofold negative charge (and either one counterion carrying the charge +2 or two counterions carrying the charge +1), in particular monoalkyl or monoacyl sulfosuccinates, preferably disodiummonoalkyl or monoacylsulfosuccinates wherein the alkyl group has from 8 to 20 carbon atoms. According to one preferred embodiment these sulfosuccinates have the following formula (1) 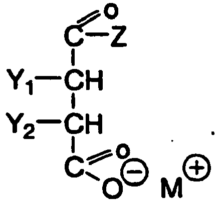 wherein Y₁ is hydrogen and Y₂ is SO₃⁻M⁺, or preferably Y₁ is SO₃⁻M⁺ and Y₂ is hydrogen; M⁺ is the counterion, preferably sodium and Z comprises at least one alk(en)yl, alkanoyl or alkenoyl group which is bound to the terminating carbon atom of the sulfosuccinate chain by a linker preferably selected from -O-, -NH-, -O-(CH₂CH₂-O-)ₙ wherein n is 0 or 1-12, i.e. (poly)alkylenoxy obtained by ethoxylating with not more than 12, preferably 1 to 4 on average moles of ethylene oxide, ethanol amide (MEA), monoisopropanol amide (MIPA) and diethanol amide (DEA). The alk(en)yl, alkanoyl or alkenoyl group may be branched or linear, preferably the latter, and has preferably from 8 to 20, more preferably 10 to 18, even more preferably 12 to 16 carbon atoms. According to one more preferred embodiment, Z = X- (CH₂CH₂-O)ₙ-R wherein X is -O- or -NH- and n is 0 or 1 to 4 on average and R represents an alkenyl or preferably alkyl group having from 8 to 20, preferably 10 to 18, even more preferably 12 to 16 carbon atoms.

Non-limiting commercially available examples for this class of anionic surfactants (in their INCI nomenclature) are disodium cetearyl sulfosuccinamate, disodium cetearyl sulfosuccinate, disodium cocamido DEA-sulfosuccinate, disodium cocamido MIPA-sulfosuccinate, disodium cocamido PEG-3 sulfosuccinate, disodium cocoyl sulfosuccinamate, disodium cocoyl sulfosuccinate, disodium C12-15 pareth sulfosuccinate, disodium deceth-6 sulfosuccinate, disodium dodecyloxy propyl sulfosuccinamate, disodium isodecyl sulfosuccinate, disodium lauramido DEA-sulfosuccinate, disodium lauramido MEA-sulfosuccinate, disodium laureth sulfosuccinate (one ingredient of Lumorol^{®} K5240), disodium lauryl sulfosuccinate, disodium myristamido MEA-sulfosuccinate, disodium nonoxynol-10 sulfosuccinate, disodium oleamido MEA-sulfosuccinate, disodium oleamido MIPA-sulfosuccinate, disodium oleth-3 sulfosuccinate, disodium N-oleyl sulfosuccinamate, disodium oleyl sulfosuccinate, disodium stearyl sulfosuccinamate, disodium tallow sulfosuccinamate and disodium undecylenamido MEA-sulfosuccinate.

Where this is not yet explicitly indicated it is preferred that the positive counterion(s) present in the anionic surfactants according to item (1) to (14) are (an) ammonium or alkali metal ion(s), such as potassium and in particular sodium ion(s).

In addition, reference can be made to the description of anionic lathering surfactants in EP 1 011 630 B1 (based on WO 99/013861), specifically par. [0124] to [0134]

Amphoteric lathering surfactants useful for the present invention include aliphatic secondary and tertiary amines, preferably wherein the nitrogen is in a cationic state, in which the aliphatic radicals can be straight or branched chain and wherein one of the radicals contains an ionisable water solubilizing group such as carboxy, sulphonate, sulphate, phosphate or phosphonate. Illustrative substances are cocamidopropyl betaine (one component of Lumorol^{®} K 5240), cocamphoacetate, cocamphodiacetate, cocamphopropionate, cocamphodioproprionate, cocamidopropyl PG-dimonium chloride phosphate, coco dimethyl carboxymethyl betaine, cetyl dimethyl betaine and combination thereof.

As regards non-limiting examples of amphoteric lathering surfactants reference is also made to the description found in par. [0141] to [0150] of EP 1 011 630 B1. Nonlimiting examples of amphoteric or zwitterionic surfactants are those selected from the group consisting of betaines, sultaines, hydroxysultaines, alkyliminoacetates, iminodialkanoates, aminoalkanoates, and mixtures thereof.

Examples of betaines include the higher alkyl betaines, such as coco dimethyl carboxymethyl betaine, lauryl dimethyl carboxymethyl betaine, lauryl dimethyl alpha-carboxyethyl betaine, cetyl dimethyl carboxymethyl betaine, cetyl dimethyl betaine (available as Lonzaine 16SP from Lonza Corp.), lauryl bis-(2-hydroxyethyl) carboxymethyl betaine, oleyl dimethyl gamma-carboxypropyl betaine, lauryl bis-(2-hydroxypropyl)alpha-carboxyethyl betaine, coco dimethyl sulfopropyl betaine, lauryl dimethyl sulfoethyl betaine, lauryl bis (2-hydroxyethyl) sulfopropyl betaine, amido-betaines and amidosulfobetaines (wherein the RCONH(CH₂)₃ radical is attached to the nitrogen atom of the betaine), oleyl betaine (available as amphoteric Velvetex OLB-50 from Henkel), and cocamidopropyl betaine (available as Velvetex BK-35 and BA-35 from Henkel).

Examples of sultaines and hydroxysultaines include materials such as cocamidopropyl hydroxysultaine (available as Mirataine CBS from Rhone-Poulenc). Preferred for use herein are amphoteric surfactants having the following formula (2): 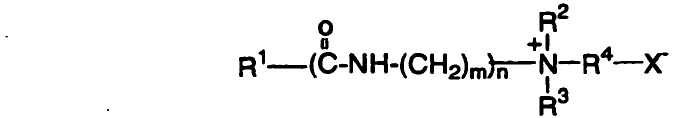 wherein R¹ is unsubstituted, saturated or unsaturated, straight or branched chain alkyl having from 9 to 22 carbon atoms. Preferred R¹ has from 11 to 18 carbon atoms; more preferably from 12 to 18 carbon atoms; more preferably still from 14 to 18 carbon atoms; m is an integer from 1 to 3, more preferably from 2 to 3, and more preferably 3; n is either 0 or 1, preferably 1; R² and R³ are independently selected from the groups consisting of alkyl having from 1 to 3 carbon

atoms, unsubstituted or mono-substituted with hydroxy, preferred R² and R³ are CH₃; X is selected from the groups consisting of CO₂, SO₃ and SO₄; R⁴ is selected from the group consisting of saturated or unsaturated, straight or branched chain alkyl, unsubstituted or monosubstituted with hydroxy, having 1 to 5 carbon atoms. When X is CO₂, R⁴ preferably has 1 or 3 carbon atoms, more preferably 1 carbon atom. When X is SO₃ or SO₄, R⁴ preferably has from 2 to 4 carbon atoms, more preferably 3 carbon atoms. Examples of amphoteric surfactants of the present invention include the following compounds: 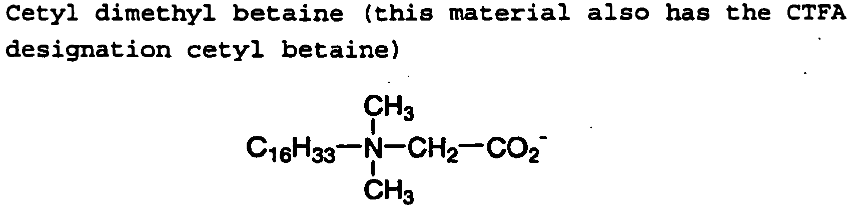 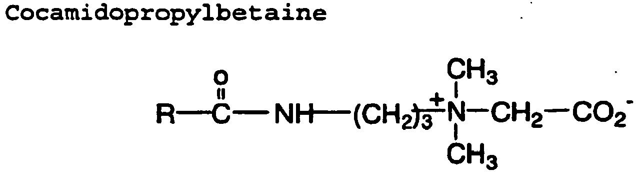 wherein R has from 9 to 13 carbon atoms 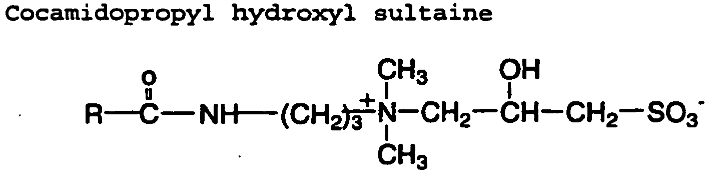 wherein R has from 9 to 13 carbon atoms.

Examples of other useful amphoteric surfactants are alkyliminoacetates, and iminodialkanoates and aminoalkanoates of the formulas RN[(CH₂)ₘ-CO₂M]₂ and RNH(CH₂)ₘ-CO₂M wherein m is from 1 to 4, R is a C₈-C₂₂ alkyl or alkenyl, and M is H, alkali metal, alkaline earth metal, ammonium, or alkanolammonium. Also included are imidazolinium and ammonium derivatives. Specific examples of suitable amphoteric surfactants include sodium 3-dodecyl-aminopropionate, sodium 3-dodecylaminopropane sulfonate, N-higher alkyl aspartic acids such as those produced according to the teaching of U.S. Patent 2,438,091 and the products sold under the trade name "Miranol" and described in U.S. Patent 2,528,378. Other examples of useful amphoterics include amphoteric phosphates, such as coamido-propyl PG-dimonium chloride phosphate (commercially available as Monaquat PTC, from Mona Corp.). Also useful are amphoacetates such as disodium lauroamphodiacetate, sodium lauroamphoacetate, and mixtures thereof.

The nonionic surfactant is preferably selected from amine oxides, alkylglucosides, alkylpolyglucosides, polyhydroxy fatty acid amides, alkoxylated mono- and di-fatty acid esters, alkoxylated fatty alcohols, alkoxylated alkylphenols, fatty acid monoglycerides, polyoxyethylene sorbitan, lathering sucrose esters (e.g. sorbitan mono-and di fatty acids), and mixtures thereof as well as N-(hydroxyalkyl)-fatty acid amides and mixtures of these with any of the above nonionic surfactants

(n1) Amine oxides preferably correspond to the general formula (1)

R¹R²R³NO (1)

wherein R¹ is an alkyl, alkenyl or monohydroxy alkyl radical of from 8 to 22, in particular 12 to 18 carbon atoms, wherein said alkyl, alkenyl or monohydroxy alkyl may be linked to 0 to 10 ethylene oxide moieties, and/or 0 to 1 glyceryl moiety, and R² and R³ are aliphatic groups containing from about 1 to 3 carbon atoms and from 0 to 1 hydroxy group, e.g. methyl, ethyl, propyl, hydroxyethyl, or hydroxypropyl. The amine oxide may also represent a mixture wherein for instance R¹ differs in the number of carbon atoms. This is frequently the case if the alkyl, alkenyl or monohydroxy alkyl is derived from natural fatty acid mixtures such as occurring in coconut (cocamine oxide).

Examples of amine oxides suitable for use in this invention include dimethyl-dodecylamine oxide, oleyldi(2-hydroxyethyl) amine oxide, dimethyloctylamine oxide, dimethyl-decylamine oxide, dimethyl-tetradecylamine oxide, 3,6,9-trioxaheptadecyldiethylamine oxide, di(2-hydroxyethyl)-tetradecylamine oxide, 2-dodecoxyethyldimethylamine oxide, 3-dodecoxy-2-hydroxypropyldi(3-hydroxypropyl)amine oxide, dimethylhexadecylamine oxide. According to one embodiment, the amine oxide lathering surfactant is alkyl dimethyl amine oxide, in particular coco dimethyl amine oxide.

(n2) Alkylglucosides and alkylpolyglucosides are useful herein, and can be broadly defined as condensation products of long chain alcohols, e.g. C8-30 alcohols, with sugars or starches or sugar or starch polymers, i.e., glycosides or polyglycosides. These compounds can be represented by the formula (S)n-O-R wherein S is a sugar moiety such as glucose, fructose, mannose, and galactose; n is an integer of from 1 to 1000, and R is a C8-30 alkyl group. Examples of long chain alcohols from which the alkyl group can be derived include decyl alcohol, cetyl alcohol, stearyl alcohol, lauryl alcohol, myristyl alcohol, oleyl alcohol, and the like. Preferred examples of these surfactants include those wherein S is a glucose moiety, R is a C8-20 alkyl group, and n is an integer of from 1 to 9. Commercially available examples of these surfactants include decyl polyglucoside (available as APG 325 CS from Henkel) and lauryl polyglucoside (available as APG 600CS and 625 CS from Henkel). Also useful are sucrose ester surfactants such as sucrose cocoate and sucrose laurate.

(n3) Other useful nonionic surfactants include polyhydroxy fatty acid amide surfactants, more specific examples of which include glucosamides, corresponding to the structural formula (2).

R⁵-C(=O)-N(R⁴)-Z (2)

wherein: R⁴ is H, C1-C4 alkyl, 2-hydroxyethyl, 2-hydroxypropyl, preferably C1-C4 alkyl, more preferably methyl or ethyl, most preferably methyl; R⁵ is C5-C31 alkyl or alkenyl, preferably C7-C19 alkyl or alkenyl, more preferably C9-C17 alkyl or alkenyl, most preferably C11-C15 alkyl or alkenyl; and Z is a polyhydroxyhydrocarbyl moiety having a linear hydrocarbyl chain with at least 3 hydroxyls directly connected to the chain, or an alkoxylated derivative (preferably ethoxylated or propoxylated) thereof. Z preferably is a sugar moiety selected from the group consisting of glucose, fructose, maltose, lactose, galactose, mannose, xylose, and mixtures thereof. An especially preferred surfactant corresponding to the above structure is coconut alkyl N-methyl glucoside amide (i.e., wherein the R⁵CO-moiety is derived from coconut oil fatty acids). Processes for making compositions containing polyhydroxy fatty acid amides are disclosed, for example, in G.B. Patent Specification 809, 060, published February 18, 1959, by Thomas Hedley & Co., Ltd., U.S. Patent No. 2,965,576, to E.R. Wilson, issued December 20, 1960, U.S. Patent No. 2,703,798, to A.M. Schwartz, issued March 8, 1955; and U.S. Patent No. 1,985,424, to Piggot, issued December 25, 1934.

(n4) Preferred alkoxylated mono- and di- fatty acid esters include the condensation products of 1 to 100 mol (e.g. 2 to 50 mol) of ethylene oxide or propylene oxide with 1 mol (monoester) or 2 mol (diester) of fatty acids having preferably from 8 to 20 carbon atoms. Mono- and di- fatty acid esters of ethylene glycol (condensation product of 1 mol ethylenoxide) include for instance ethylene glycol distearate.

(n5) Alkoxylated fatty alcohols preferably include the condensation products of C10-C20 fatty alcohols with from 1 or 2 to 100 mol, in particular 2 to 12 mol of ethylene oxide or propylene oxide. The fatty alcohol may be branched or linear and has preferably from 10 to 16 carbon atoms. Examples for commercially available foam-building alkoxylated fatty alcohols include the following (INCI nomenclature): C10-C12 pareth-5, C12-14 pareth-7, isodeceth-6, isoundeceth-3, isoundeceth-6, isoundeceth-9, isoundeceth-12, laureth-2, trideceth-8, trideceth-15, C12-16 pareth with various average ethoxylation degrees (-1,-2,-3,-5,-6,-7,-8 or -11), C14-16 pareth-7, steareth-200, trideceth, trideth-10, isodeceth-11, trideceth-11, oleth-25.

(n6) Alkoxylated alkylphenols are preferably obtained by condensing C2-C10 alkylphenols with from 2 to 20 mols of alkylene oxides such as ethylene oxide or propylene oxide.

(n7) Preferred fatty acid monoglycerides are obtained by esterifying one hydroxyl group of glycerol with one fatty acid having preferably from 8 to 20 carbon atoms.

(n8) Preferred polyoxyethylene sorbitan surfactants include polyoxyethylene residues derived from 2 to 100 mol of ethylene oxide and are for instance commercially available as Polysorbate^{®} 80 and Tweeny 80.

(n9) Lathering sucrose esters are preferably derived from sucrose and a fatty acid having preferably 8 to 22, in particular 12 to 18 C atoms, such as sucrose cocoate or sucrose laurate.

(n10) N-(hydroxylalkyl)-fatty acid amides can be obtained by the amidation reaction of a fatty acid and an amino alcohol component. The amino alcohol component preferably represents an amino alcohol having a primary or secondary amine group, one or two hydroxy groups and two, three or four carbon atoms. Preferred embodiments of this amino alcohol component are monoethanol amine (MEA), diethanol amine (DEA) or monoisopropanol amine (MIPA). The fatty acid component may be saturated or unsaturated, for instance monounsatured. The fatty acid component preferably has 10 to 20 carbon atoms, for instance 12 to 18 carbon atoms. The fatty acid component may be linear or branched. Linear saturated fatty acids are preferred. Commercially available examples of foam building surfactants belonging to this class are (in their INCI nomenclature) isosteramide DEA, lauramide MEA, lauramide MIPA, myristamide MEA, lauramide DEA, oleamide MIPA, palm kernel amide MEA, myristamide MEA, palm kernel amide DEA, cocamide DEA, myristamide DEA and cocamide DEA.

It is preferred to apply the lathering surfactant(s) and optionally other components mentioned hereinafter as aqueous solution to the tissue web. Such aqueous solutions are commercially available, for instance Spülflott^{®} "Standard" (available from Tillmann GmbH, Germany) or Lumorol^{®} 4339 or Lumorol^{®} K 5240 available from Zschimmer & Scharz, Germany. The content of active substances in these commercially available surfactant solutions can vary considerably. In general, suitable aqueous solutions have a content of active substances (total surfactants) in the order of 5 to 80, in particular 15 to 70 wt-%. To optimize application of the respective surfactant solution the same can be diluted or concentrated.

According to the present invention, the following commercially available foam-building surfactants (in their INCI nomenclature) can be used:
Ammonium deceth sulfate, ammonium nonoxynol-6 sulfate, Cocamide MIPA, Coco-betaine, Cocodihydroxyethylamine oxide, Coco hydroxyethyl PEG-imidazolinium chloride phosphate, Coco oleamidopropyl betaine, Cycloneopentyl, cyclo (dimethylaminoethyl) pyrophosphato zirconate, dimesyl salt, DEA-myreth sulfate, Di (butyl, methyl pyrophosphato) ethylene titanate di (dioctyl, hydrogen phosphite), Dicyclo
   (dioctyl) pyrophosphato dioctyl titanate, Dicyclo (dioctyl) pyrophosphato titanate, Di (dioctylphosphato) ethylene titanate, Di (dioctylpyrophosphato) ethylene titanate, Disodium caproamphodiacetate, Disodium caproamphodipropionate, Isopropanolamine lauryl sulfate, Isopropyl titanium triisostearate, Isostearamido-propyl morpholine lactate, Lauramidopropylamine oxide, Lauroampho PEG-glycinate phosphate, Lauroyl chloride, Minkamidopropylamine oxide, N-Octyl pyrrolidone, PEG-6 cocamide MEA; PEG-5 lauramide, PEG-10-PPG-10 glyceryl stearate, PEG 20-PPG-10 glyceryl stearate, PEG-80 sorbitan laurate, Potassium lauryl sulfate, Sesamdiopropyl dimethylamine lactate, Sodium C9-14 alkyl sulfate, Sodium coco-glucoside tartate, Sodium cocomonoglyceride sulfate, Sodium C12-15 pareth-3-sulfate, Sodium isodecyl sulfate, Sodium lauramido DEA-sulfosuccinate, Sodium laureth-5 carboxylate, Sodium lauroamphoacetate, Sodium lauroyl methylaminopropionate, Sodium lauryl sulfoacetate, Sodium methyl myristoyl taurate, Sodium nonoxynol-6 sulfate, Sodium oleoamphohydroxypropylsulfonate, Sodium oleoamphopropionate, Sodium N-oleoyl sarcosinate, Sodium tallamphopropionate, Sodium trideceth-3 carboxylate, Sodium trideceth-6 carboxylate, Sodium triacylbenzene sulfonate, Stearamidopropylamine oxide, Tallowamidopropyl hydroxyl-sultaine, Tetra (2,dialkyloxymethyl)-1 butoxy titanium di (ditridecyl)phosphite, Wheat germamidopropylamine oxide, Sodium C12-C15 alkyl sulfate, Oleoyl sarcosine, Stearoyl sarcosine, Coco propionate, Disodium tallow aminodipropionate, DEA-lauryl sulfate, Undecylenoyl collagen amino acids, Disodium oleamido MIPA-sulfosuccinate, Canolamidopropyl betaine, Cocaminobutyric acid, Cocodimethylammonium-3-sulfopropylbetaine, Cocoiminiodipropionate, Cocoyl sarcosine, DEA-lauryl sulfate, Mixed isopropanolamines lauryl sulfate, Myristoyl sarcosine, Octoxynol-50, Oleamide MIPA, Oleoyl sarcosine, Sodium caproyl lactylate, Sodium cocoamphoacetate, Sodium cocamphohydroxypropyl sulfonate, Sodium cocaamphopropionate, Sodium cocoyl isethionate, Sodium deceth sulfate, Sodium
   laureth-12 sulfate, Sodium lauryl phosphate, Sodium methyl cocoyl taurate, Sodium methyl oleoyl taurate, Sodium myristoyl sarcosinate, Sodium myristyl sulfate, Sodiumm nonoxynol-4-sulfate, Steapyrium chloride, Stearamide, Stearoyl sarcosine, TEA-lauryl sulfate, Trideceth-3 carboxylic acid, Sodium lauroyl sarcosinate, Sodium methyl cocoyl taurate, Sodium cocoyl isetionate, C12-C14 alkyl dimethyl betaine, Cocoamidopropyl hydroxysultaine, Cocamidopropyl sulfobetaine, Cocodimethylammonium-3-sulfopropylbetaine, Hydrolyzed wheat protein, Lauryl betaine, Lauryl hydroxysultaine, PEG-3 cocamide MEA, Stearamide, Disodium cocoamphodipropionate, Lauramidopropyl betaine, Sodium nonoxynol-4 sulfate, Sodium trideceth sulfate, isostearamidopropyl betaine, Ammonium lauryl sulfate, Oleoyl sarcosine, Sodium caproamphoacetate, Sodium cocoamphopropionate, Sodium nonoxynol-4 sulfate, TEA-lauryl sulfate, Sodium/TEA-lauroyl hydrolyzed collagen amino acids, TEA-lauroyl keratin amino acids, Oleyl betaine, Ammonium decyl sulfate, Ammonium lauryl sulfate, Ammonium 2-ethylhexanol sulfate, TEA-dodecylbenzenesulfonate, Sodium laureth sulfate, Babassuamidopropylamine oxide, Babassuamidopropyl betaine, Caparamide DEA, Disodium lauroamphodiacetate, Minkamidopropyl betaine, PEG-3 cocamide, PEG-6 lauramide, Sesamidopropyl betaine, Wheat germamidopropyl betaine, Cocamine oxide, Myristamine oxide, Sodioum lauryl sulfate, Lauryl betaine, Sodium lauroyl sarcosinate, Almondamidopropalkonium chloride, Babassamidopropalkonium chloride, Babassamidopropyl dimethylamine lactate, Bisisostearamidopropyl ethoxyethyl dimonium chloride, Capryloyl hydrolyzed collagen, Oleamidopropyl betaine, Olivamidopropalkonium chloride, Palmitoyl collagen amino acids, Sodium cocoyl hydrolyzed soy protein, Stearamidopropyl cetearyl dimonium tosylate, Sucrose ricinoleate, Wheat germamidopropalkonium chloride, Cocoyl sarcosine, Sodium nonoxynol-4 sulfate, Deceth-4 phosphate, Myristamine oxide, Palmitamine oxide, Sodium cocoamphohydroxypropyl sulfonate, Sodium lauroyl sarcosinate, DEA laurate sulfate, Oleoyl sarcosine, Potassium
   dihydroxyethyl cocoamine oxide phosphate, Sodium cocoamphopropionate, Sodium a sulfomethyl cocoate, Sodium myristyl sulfate, Stearoyl sarcosine, Bisisostearamidopropyl ethoxyethyl dimonium chloride, C12-14 alkyl dimethyl betaine, Lapyrium chloride, Laurly/myristyl betaine, Oleamine oxide, Sodium cocoamphohydroxypropyl sulfonate, Sodium lauroyl sarcosinate, Sodium methyl oleoyl taurate, Steapyrium chloride, Cocoyl sarcosine, DEA-laureth sulfate, Oleoyl sarcosine, Sodium cocoamphoacetate, Sodium cocoamphopropionate, Sodium C12-15 pareth sulfate, Myristoyl sarcosine, TEA-lauryl sulfate, Myristamine oxide, Cocaminobutyric acid, Sodium oleyl sulfosuccinamate, C12-14 alkyl dimethyl betaine, Ammonium lauryl sulfate, Canolamidopropyl betaine, Cocamidopropyl betaine, Sodium/magnesium laureth sulfate, Sodium caproamphoacetate, Trisodium lauroampho PG-acetate phosphate chloride, Sodium laureth sulfosuccinate, Sodium lauryl sulfosuccinate, Ammonium lauryl sulfate, Acamonium/TEA lauryl sulfate, Cocamidopropyl hydroxysultaine, Cocamidopropyl sulfobetaine, Disodium cocamphodiacetate, Distearyldimonium chloride, Lapyrium chloride, Lauryl/myristyl betaine, Linoleamidopropyl betaine, Milk lipid amiodpropylamine oxide, Mixed isopropanolamines myristate, Oleyl betaine, Palmitamine oxide, PPG-1 hydroxyethyl caprylamide, PPG-2 hydroxyethyl cocamide, hydroxyethyl linoleamide, Quaternium-76 hydrolyzed collagen, Silicone quaternium-2, Sodium C12-15 alkoxypropyl iminodipropionate, Sodium C12-15 alkyl sulfate, Sodium C14-16 olefin sulfonate, Sodium decylbenzene sulfonate, Sodium laureth-13 acetate, Sodium/magnesium laureth sulfate, Sodium methyl cocoyl taurate, Sodium trideceth sulfate, Soyamidopropylamine oxide, Soyamidopropyl betaine, TEA-ammonium lauryl sulfate, TEA-cocoyl hydrolyzed collagen, Sodium lauroyl oat aminoacids, Ammonium lauryl sulfate, Cocoyl sarcosine, DEA-lauryl sulfate, Disodium cocoamphodiacetate, Magnesium lauryl sulfate, Sodium lauroyl sarcosinate, Sodium methyl cocoyl taurate, Cocoyl sarcosine, Sodium myristoyl sarcosinate, Sodium nonoxynol-4 sulfate, C12-14 alkyl dimethyl betaine, Canolamidopropyl betaine,
   Cocamidopropyl betaine, Cocamidopropyl sulfobetaine, cocamine oxide, DEA-laureth sulfate, Disodium cocamido DEA-sulfosuccinate, Disodium cocoamphodipropionate, Isostearamidopropyl betaine, Lauramidopropyl betaine, Lauramidopropyl dimethyl betaine, Lauryl betaine, Magnesium lauryl sulfate, Myristamidopropyl dimethylamine dimethicone copolyol phosphate, Myristamine oxide, Sodium C12-15 alkoxypropyl iminodipropionate, Sodium cocoyl isethionate, Sodium lauroyl sarcosinate, Sodium myristoyl sarcosinate, Sodium/TEA-lauroyl hydrolyzed collagen amino acids, TEA-lauroyl keratin amino acids, TEA-lauryl sulfate, Capryloyl hydrolyzed collage, Undecylenoyl collagen amino acids, Bisisostearamidopropyl ethoxyethyl dimonium chloride, Capryloyl hydrolyzed collagen, Dipalmitoyl hydroxyproline, Oleamidopropyl betaine, Olivamidopropyl betaine, Palmitoyl collagen amino acids, Sodium cocoyl hydrolyzed soy protein, Undecylenoyl collagen amino acids, Disodium cocoamphodipropionate, Capryloyl hydrolyzed collagen, Palmitoyl collagen amino acids, Sodium stearyl sulfosuccinamate, Undecylenoyl collagen amino acids, Sodium cocoyl hydrolyzed collagen, Cocamidopropyl PG-dimonium chloride phosphate, TEA-cocoyl hydrolyzed soy protein, Cocamidopropyl PG-dimonium chloride phosphate, Myristamidopropyl dimethylamine dimethicone copolyol phosphate, Sodium stearyl sulfosuccinamate, Lauramine oxide, Sodium lauroyl sarcosinate, Disodium nonoxynol-10 sulfosuccinate, Ammonium decyl sulfate, Cocodimethylammonium-3-sulfopropylbetaine, Cocoyl sarcosine, Isohexylpropylamine, Lauryl betaine, Oleamidopropyl betaine, Oleoyl sarcosine, Sodium cocoamphoacetate, Sodium C12-15 pareth sulfate, Sodium triaceth sulfate, Stearoyl sarcosine, Magnesium lauryl sulfate, TEA-lauryl sulfate, Sodium methyl lauroyl taurate, Sodium methyl palmitoyl taurate, Sodium methyl stearoyl taurate, Lauramine oxide, C13-15 dimethyl amine oxide, Dihydroxyethyl tallowamine oxide, Almondamidopropyl betaine, Lauroyl sarcosine, Cocamidopropylamine oxide, Palmitoyl collagen amino acids, Undecylenoyl collagen amino acids, Dihydroxyethyl cocamine oxide, TEA-lauryl sulfate, Ammonium decyl sulfate, Disodium lauraminodipropionate, Myristamine oxide; Lauramidopropyl dimethyl betaine, Linoleamidopropyl betaine, Canolamidopropyl betaine, TEA-lauroyl keratin amino acids.

The term aqueous" means that water is the main solvent (per volume) of the lathering surfactant, but does not exclude the presence of water-miscible solvents, such as aliphatic alcohols (in this respect polyols are not counted among the solvents). It is however preferred that water is the only solvent.

It is neither necessary nor preferred that the lathering surfactant is present as polymer-surfactant complex as described for instance in WO 03/054132.

The tissue product of the present invention may also comprise a water-binding agent, in particular a polyhydric alcohol. Typical polyhydric alcohols include glycerol, polyalkyleneglycols and alkylene polyols and their derivatives, including propylene glycol, dipropylene glycol, polypropylene glycol, polyethylene glycol (for instance those having an average molecular weight of 200 to 2.000.000) and derivative thereof, sorbitol, hydroxypropyl sorbitol, hexylglycol, 1,3-butylene glycol, 1,2,6-hexantriol, ethoxylated glycerol, propoxylated glycerol and mixtures thereof.

According to one embodiment of the present invention, the lathering surfactant (e.g. of nonionic, anionic or amphoteric type) or a mixture thereof is combined with a water-binding agent selected from C5-C12 alkyl diols such as propylene glycol, hexylene glycol, octylene glycol, decylene diol and dodecylene diol. However, according to another embodiment, the above C5-C12 alkyl diol is not used.

Whatever type of water-binding agent is employed, the weight ratio of water-binding agent(s) to lathering surfactant(s) preferably ranges from 1/2 to 1/10, more preferably from 1/1 to 1/8, and is for instance 1/2 to 1/6 or 1/2.5 to 1/4.

According to one further embodiment of the present invention, the composition comprising the lathering surfactant or a mixture of lathering surfactants comprises at least one alkoxylated fatty acid partial glyceride. The fatty acid glyceride comprises, preferably as main component by weight, mono- and/or diglycerides of a fatty acid (mixture) having preferably from 10 to 20, in particular 12 to 18 carbon atoms, as occurring in a fatty acid mixture derived from coconut. This partial glyceride is alkoxylated, preferably ethoxylated with preferably 1 to 100, in particular 2 to 12 mol ethyleneoxide. One commercially available surfactant of this type is PEG-9 cocoglyceride as used in Lumorol^{®} K 5240 (Zschimmer & Schwarz, Germany)

A perfume may also be added to the tissue paper product of the invention, for instance by incorporating the same into the aqueous surfactant composition to be applied.

The tissue paper product of the invention preferably comprises a mixture of anionic and amphoteric lathering surfactants or a mixture of anionic and nonionic lathering surfcactants. In the first mixture the total content of anionic lathering surfactants and the total content of amphoteric lathering surfactants, respectively, may each be at least 5, for instance at least 10, at least 15, at least 20, at least 25 or at least 30 parts by weight based on the entire mixture of lathering surfactants, for instance based on the entire mixture of anionic and amphoteric lathering surfactants, if no other lathering surfactants are present. In the second mixture the total content of anionic lathering surfactants and the total content of nonionic lathering surfactants, respectively, may each be at least 5, for instance at least 10, at least 15, at least 20, at least 25 or at least 30 parts by weight based on the entire mixture of lathering surfactants, for instance based on the entire mixture of anionic and nonionic lathering surfactants, if no other lathering surfactants are present. If other surfactants are present, these weight ratios preferably also apply to the entire mixture of surfactants.

In the above mixtures (anionic/amphoteric or anionic/nonionic) at least one anionic lathering surfactant can be selected from the above classes (a1) to (a14), at least one nonionic lathering surfactant can be selected from the above classes (n1) to (n10) and at least one amphoteric surfactant can be selected from betaines, sultaines, hydroxysultaines, alkyliminoacetates, iminodialkanolates, aminoalkanoates as described above. The anionic, amphoteric or nonionic lathering surfactant may also be selected from the above-identified commercially available surfactant types.

According to one preferred embodiment (A), the aqueous composition comprising a lathering surfactant comprises a mixture of
- at least one (e.g. 1, 2, 3) anionic lathering surfactant, preferably belonging to one of the above classes (a1), (a2), (a3), (a4), (a5), (a6), (a7), (a8), (a9), (a10), (a11), (a12), (a13), (a14), or mixtures thereof, for instance one or more of the above-identified commercially available surfactants, more preferably (a5) an alkylether sulfate, in particular (C10-C16) alkyl ethoxylate sulphuric acid, sodium salt, and
- at least one (e.g. 1, 2, 3) amphoteric lathering surfactant, preferably one selected from betaines, sultaines, hydroxysultaines, alkyliminoacetates, iminodialkanoates, aminoalkanoates, and mixtures thereof, for instance one or more of the above-identified commercially available surfactants, in particular one combining a tertiary amine in a cationic state and a carboxy group, such as occurring in betaines, more preferably a surfactant of formula (2), in particular cocamidopropyl betaine.

In this embodiment (A) the anionic lathering surfactant(s) is preferably present in a higher weight ratio than the amphoteric lathering surfactant(s). Preferably, the amount of anionic lathering surfactant(s) is at least 25 to 75 parts by weight and that of the amphoteric lathering surfactant(s) less than 25 parts by weight based on the entire mixture of lathering surfactants, preferably based on the entire mixture of surfactants, if applicable. The amphoteric lathering surfactant(s) is preferably added in an amount corresponding to at least 1, for instance at least 2, at least 5, at least 10, at least 15 or at least 20 parts by weight based on the entire mixture of lathering surfactants, preferably based on the entire mixture of surfactants, if applicable. According to this embodiment, the aqueous mixture comprising a lathering surfactant may also comprise an inorganic or organic acid, such as citric acid. An aqueous surfactant solution of this type is commercially available under the trade name Spülflott^{®} from Tillmann GmbH, Germany.

According to one further preferred embodiment (B), the aqueous solution comprising a lathering surfactant comprises a mixture of
- at least one (e.g. 1, 2, 3) anionic lathering surfactant, preferably belonging to one of the above classes (a1), (a2), (a3), (a4), (a5), (a6), (a7), (a8), (a9), (a10), (a11), (a12), (a13), (a14), or mixtures thereof, for instance one or more of the above-identified commercially available surfactants, in particular (a1) an alkylbenzene sulfonate such as the sodium salt of a C10-C13 alkyl benzene sulfonate and/or (a5) an alkyl ether sulfate, and
- at least one (e.g. 1, 2, 3) nonionic lathering surfactant, preferably belonging to one of the above classes (n1), (n2), (n3), (n4), (n5), (n6), (n7), (n8), (n9), (n10), or mixtures thereof, for instance one or more of the above-identified commercially available surfactants, in particular (n5) a fatty alcohol ethoxylate and/or (n10) a N-hydroxy alkyl-fatty acid amide such as fatty acid diethanol amide (DEA).

In this embodiment the total content of anionic and nonionic lathering surfactants, respectively, is each at least 5, for instance at least 10, at least 15, at least 20, at least 25, at least 30 parts by weight based on the entire mixture of lathering surfactants, preferably based on the entire mixture of surfactants, if applicable. One commercially available aqueous surfactant solution of this type is Lumorol^{®} 4339 which is available from Zschimmer & Schwarz, Germany.

According to further preferred embodiment (C), the aqueous solution comprising a lathering surfactant comprises a mixture of
o at least two (e.g. 2, 3, 4) anionic lathering surfactants, preferably belonging to at least two of the above classes (a1), (a2), (a3), (a4), (a5), (a6), (a7), (a8), (a9), (a10), (a11), (a12), (a13), (a14), for instance two of the above-identified commercially available surfactants, in particular (a5) alkyl ether sulfate such as sodium laureth sulfate and/or (a14) a sulfosuccinate having a twofold negative charge, in particular one of formula (1) such as disodium laureth sulfosuccinate, and
o at least one (e.g. 1, 2, 3) amphoteric lathering surfactant, preferably one selected from betaines, sultaines, hydroxysultaines, alkyliminoacetates, iminodialkanoates, aminoalkanoates, and mixtures thereof, for instance one or more of the above-identified commercially available surfactants, in particular one combining a tertiary amine being in a cationic state and a carboxylate as in betaine surfactants, more preferably a surfactant of formula (2), most preferably cocamidopropylbetaine.

In this embodiment the weight ratio of anionic lathering surfactants and amphoteric lathering surfactant(s), respectively, is each at least 5, for instance at least 10, at least 15, at least 20, at least 25, at least 30 weight parts based on the entire mixture of lathering surfactants preferably based on the entire mixture of surfactants, if applicable. A commercially available aqueous surfactant solution of this type is Lumorol^{®} K5240 available from Zschimmer % Schwarz, Germany. Lumorol^{®} K5240 also contains PEG-9 cocoglyceride.

The tissue paper product of the present invention is obtainable by applying the lathering surfactant or a composition containing the same to one or more plies of a dry raw tissue paper web.

The term "dry tissue web" relates to a raw tissue web as obtained after the final drying step as normally effected at the Yankee cylinder or any other drying means, e.g. TAD. Even "dry" tissue webs have a residual water content which, as a rule, does not exceed 10 wt.-%. More preferably the residual water content is less than 8 wt.-%, in particular less than 6 wt.-%, for instance less than 5 wt.-% as measured according to EN20638:1993. Therefore, it is permissible to equate in this context the terms "dray" and "substantially dry". It is to be noted that the equilibrium residual water content at ambient conditions is about 7 wt.-%.

The dry web addition method leading to the tissue paper product of the invention is to be distinguished from wet web addition methods as disclosed for instance in US 4,940,513. The addition of lathering surfactant to a wet web leads to a very homogenous distribution throughout the tissue thickness and a relatively strong binding between surfactant and fiber surface which is further enhanced in the subsequent drying step. The same incidentally applies to the addition of surfactants to the slurry of papermaking fibers fed to the headbox. Therefore, a dry web addition method as used in the present invention is believed to be more efficient regarding the foaming and cleansing effect of the surfactant used.

The above-described residual water contents may increase slightly if the lathering surfactant is applied as aqueous solution. To ensure that the tissue paper product still feels dry to the touch, the tissue paper product may therefore be subjected to a drying step. However, the drying step is optional and it may be unnecessary to subject the tissue paper product to drying. In-line drying can be achieved by known drying means such as radiant heat sources (e.g. IR), microwave devices, hot air blowers and heated rollers. Off-line convection ovens, microwave ovens or forced air ovens can be used for instance.

There are no specific restrictions as to where the lathering surfactant is present in the tissue paper product of the present invention and how it is distributed over its surface and/or throughout its thickness. The lathering surfactant may be present only on one side of the tissue paper product or on both sides, or it may be present in between the plies constituting the tissue paper product. According to one embodiment of the present invention, the lathering surfactant is present as continuous coating on one or both sides of the tissue paper product. According to a further embodiment, the lathering surfactant penetrates in the tissue paper product, partially or fully, after having been applied to one or both surfaces thereof. According to one further embodiment, the lathering surfactant is not applied, or not solely applied to one or two outer surfaces, but also to an intermediate ply as existing for instance in tissue paper products having three or more plies. According to one further embodiment the lathering surfactant is present in solid (*e.g*. powdery) form between at least one outer surface, or between both outer surfaces, and at least one intermediate ply as occurring in tissue paper products having three or more plies.

According to one preferred embodiment, the lathering surfactant is present discontinuously on one or two surfaces of the product, preferably in the form of discrete deposits. The term "deposits" is not restricted to coatings solely located at and immobilized at the surface of the outer tissue plies. This term covers simultaneously those cases where the lathering surfactant is applied discontinuously to discrete areas and then partially or fully impregnates the tissue in a direction perpendicular to its surface. Simultaneously the lathering surfactant may also spread horizontally from the limited area where it was applied. According to the embodiment described in this paragraph, the surface coverage may for instance range from 10 to 90%, for instance from 20 to 80% or from 30 to 70%.

There are also no specific limitations regarding the geometry of the discrete deposits. While the later-described slot die application technique is particularly suitable to generate thin stripes having a length of 0.3 mm to 2 cm, any other pattern can be used to achieve the effect of the present invention including circles, squares, other polygons, rectangular shapes, continuous straight and wavy lines, grids, etc.

If the lathering composition applied to the tissue paper product contains other components than the lathering surfactant, for instance water-binding diol, the same are preferably applied in admixture with the lathering surfactant as described above. Nonetheless, the lathering surfactant and the other component may also be added separately.

Basically, the tissue paper product of the present invention can be marketed in any conceivable form and size. Some embodiments where cleaning can be most effectively conducted are however preferred. These include endless rolls mounted on a dispenser having a cutting blade enabling the user to cut off single sheets having an appropriate size for the intended use. According to one preferred embodiment, the tissue paper product of the present invention is converted in a manner similar as household towels, that is to rolls where single sheets are separated by perforations. According to one further preferred embodiment, single sheets are pre-cut to size, optionally folded and typically combined to piles of several sheets which can be wrapped by a plastic film or packaged in a paper or plastic box. One side of this box may encompass a removable lid portion, which is for instance surrounded by a predetermined breaking line. Thereby, the user can take out individual sheets from the box without the need of fully opening the same. Moreover, the sheets can be folded in such a manner that removing the upper sheet will entrain the adjacent lower sheet until the same appears in the opening and is ready to hand. One further embodiment involves a continuous web of sheets separated by perforations. Said web would be folded along the perforation thereby resulting in a zigzag conformation. The tissue paper product according to the invention may be provided in the form of rolls, piles, stacks, bricks, or any other shape of folded (*i.e*. single-folded or multifolded) or unfolded sheets. For instance, the tissue paper product may be a glove which optionally comprises a polymeric carrier material.

The tissue paper product of the invention may be offered for sale in a special dispenser. If the tissue paper product of the invention is in the form of a roll, it may or may not contain a core, or it may be solid. The color of the tissue paper product of the invention may be white or any arbitrary color, including pictures and/or texts. For instance, the surface of the product can be printed with a text and/or drawing explaining the cleaning concept of the present invention.

In respect of the above-described embodiments it is preferred, but not necessary that single sheets of the tissue paper product have a greater size than sheets of tissue paper products used for personal care including hankies, personal care wipes or toilet paper sheets. Generally, the sheet size may vary largely and may be in the range from 25 cm² to 2500 cm². Preferably, the sheet size is greater than 200 cm², more preferably greater than 350 cm², still more preferably greater than 400 cm², most preferably greater than 500 cm². Even greater sizes, for instance up to 800 cm² and above are also conceivable, although a typical range will be from 550 to 700 cm2.

The disposable tissue paper product of the invention may contain additional ingredients such as perfumes, scenting agents, antibacterial agents and antimould agents.

The present invention also relates to a process for the manufacture of a disposable tissue paper product as described above and below, said process comprising the step of applying a lathering surfactant or a composition containing the same to at least one surface of one or more plies of a dry tissue paper web. In this process it is preferred to apply a liquid composition comprising a lathering surfactant to a moving tissue paper web by means of a slot die.

The present invention also relates to a process for the manufacture of a disposable tissue paper product which feels dry to the touch and comprises a lathering surfactant, said process comprising the step of applying a liquid composition comprising a lathering surfactant to a moving tissue paper web by means of a slot die. In this process, the moving tissue paper web can be a wet web, but is preferably a dry web as described in the present specification and the claims.

In both processes, the liquid composition and the final product preferably have the characteristics described in the present specification and the claims. In the above processes of manufacturing the tissue paper product of the invention, the liquid composition may be an aqueous composition or a solvent-based composition. Preferably it is an aqueous composition, more preferably an aqueous solution of the lathering surfactant, optionally containing further components or ingredients *e.g*. those identified above. The solvent of the composition is not particularly limited in kind, as long as this can dissolve the lathering surfactant in a sufficient amount but it is preferably a volatile solvent that can easily be removed by drying, such as acetone, methanol, ethanol, and isopropanol. Moreover, in either process, in place of a slot die, another non-spraying equipment can be used for applying the liquid composition.

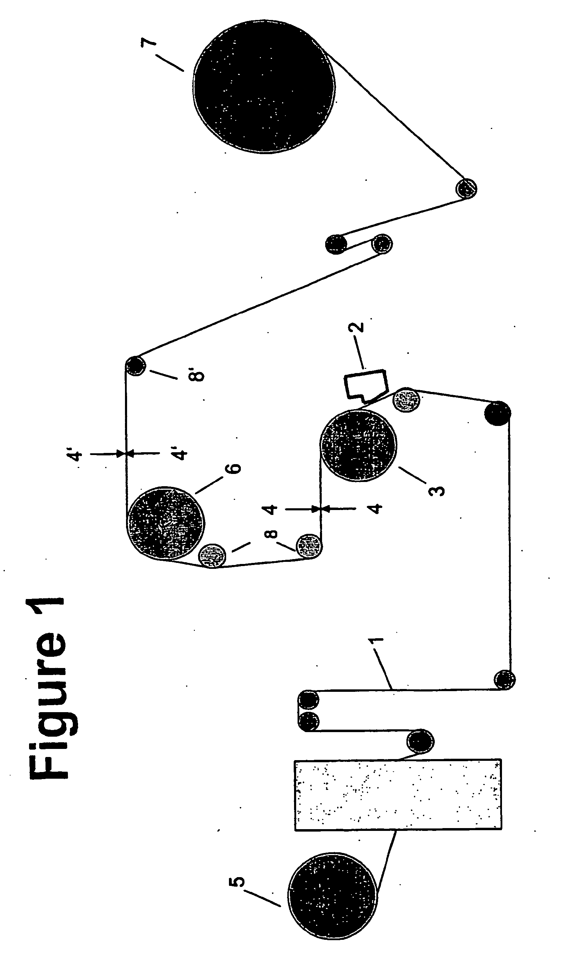

Preferred embodiments of these processes are described in the following and in the claims. One embodiment is shown in figure 1. The dry tissue paper web (1) is led from master roll (5) through optional control section (box) before it is conducted between backup roll (application roll) (3) and slot die device (2). By means of slot die device (2), a liquid composition comprising a lathering surfactant is discontinuously applied to one side of tissue web (1). Application roll (6) (optional) makes it possible to coat the other side of tissue web (1) by means of a second slot die device (not shown). After each coating step it can be preferred to subject the tissue web to a drying step by means of dryer (4) or (4') to reduce its water or solvent content. Non-limiting examples of known drying means include the use of radiant heat sources (e.g. IR), microwave devices, hot air blowers, and heated rollers. Drying also helps to reduce the contamination of subsequent idler rolls (8) or (8'). The tissue paper web comprising the lathering surfactant is finally wound on master roll (7).

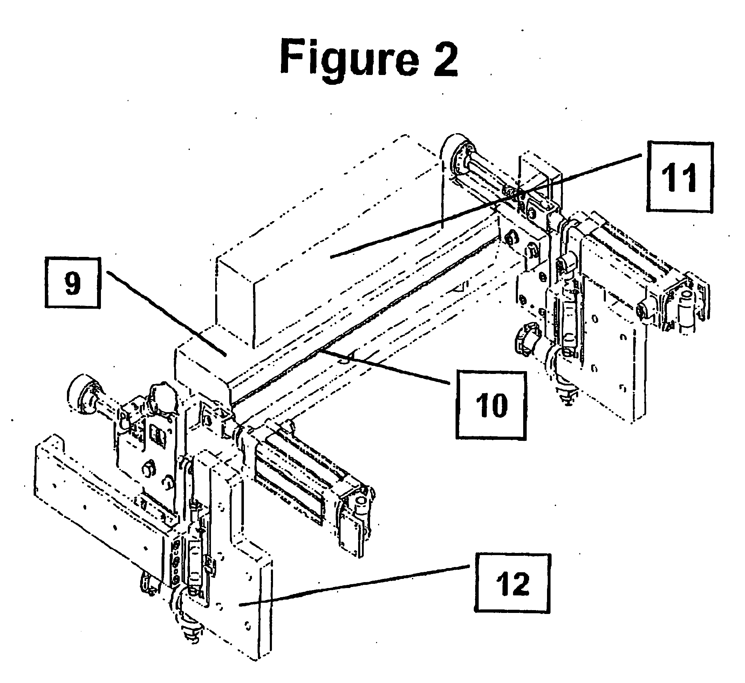

Figure 2 shows the application lip (10) and the valve section (11) of the slot die (9). One or more valves of the valve section (11) are arranged to regulate the distribution of the coating fluid which is to be conducted to the application lip (10). The coating amount is in general terms controlled by the speed of gear pumps. The adjustable rack (12) is used to arrange the slot die (9) in an optimal application position in order to get the best possible coating fluid transfer to the substrate.

Slot die devices are typically used in the textile industry for applying hot melts to textile webs. The present inventors have surprisingly found that slot die devices are very suitable for applying liquid compositions comprising a lathering surfactant since hardly any foaming or other undesired phenomena such as lint deposition are observed.

There are no specific limitations regarding the slot die device to be used. Preferably a porous coat^{®} application system available from Nordson Co., such as BC62 porous coat^{®} applicator is used. The porous coat^{®} system uses an extrusion die design that incorporates a series of hydraulic compartments which are fed by dedicated positive displacement gear pumps. This arrangement allows the system to apply a wide variety of uniform but typically discontinuous coatings over a broad range of coat weights and patterns. The coating widths can be altered easily by opening or closing the flow valves on either side of the die. Pump speeds are adjusted automatically to maintain consistent add-on rates. The system can be employed for off-roll coating which tends to achieve surface coatings and against-the-roll coating which typically leads to a deeper penetration. Details of a preferred mode used in the present invention will be given later.

One document describing porous coat^{®} technology in further detail is US 5,750,444 in the name of Nordson Co. Considering the adaptation of coating fluid and substrate necessary for the present invention, the porous coat^{®} system thus can be described as an apparatus for applying an aqueous composition of a lathering surfactant to a tissue paper web, said apparatus comprising a slot extruder die having a die outlet and means to meter an aqueous solution of a lathering surfactant in quantities sufficient to produce a discontinuous random pattern of said composition from the die slot outlet, means for running a tissue paper web past and in close vicinity to or in contact with said die outlet for receiving a coating thereon of said aqueous solution of a lathering surfactant.

Preferably, the apparatus includes a plurality of independent selectively controlled land areas feeding said fine slot extruder die outlet, at least one of said segments preferably including a plurality of independent selectively controlled, recessed land areas.

One example of a random pattern that can be generated with the porous coat^{®} technology is shown in figure 1 of US 5,750,444.

Other slot die devices and application conditions as disclosed in a series of US patents in the name of Nordson Co. may also be used under the proviso that adaptations in view of the use of a liquid solution of lathering surfactant as coating fluid and tissue paper as substrate may become necessary. This series of US patents includes US 5,423,935; US 5,429,840; US 5,685,911; US 5,418,009; US 5,524,828 and US 5,683,036. US 5,423,935 teaches for instance an apparatus and methods for producing intermittent, discrete patterns of coating material where the patterns have sharp, square leading and training edges, as well as side edges.

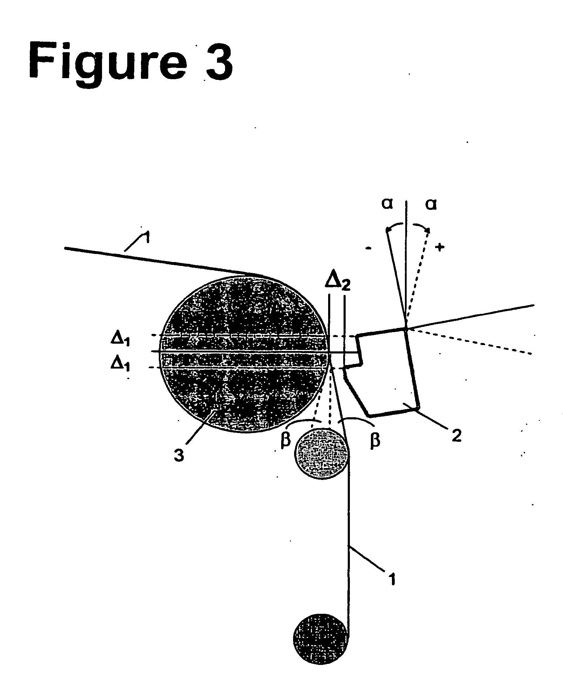

In the present invention, a slot die applicator, in particular one implementing the porous coat^{®} technology is preferably used under the conditions shown in figure 3. Figure 3 shows how the slot die applicator is preferably positioned in respect of application roll (3) and tissue web (1). Preferably, a small distance of from 0.05 to 5 mm is adjusted between the application lip (10) of slot die device (2) and application roll (3). More preferably, this distance is from 0.2 to 1.5 mm. The distance is shown as Δ₂ in figure 3. Moreover, the application lip (10) can be positioned above and below a horizontal line going through the centre of application roll (3) without adversely affecting the coating result. This leeway is shown as Δ₁ in figure 3 and preferably ranges from 25 mm above to 25 mm below the roll centre.

Moreover, it was found that it is not necessary to mount the slot die applicator in vertical position. Good coating results are also achieved if the slot die applicator is tilted by a head angle α of from -10° to +15°.

Similarly, it is not necessary to feed the incoming tissue web (1) to application roll (3) in a perfectly vertical position. The incoming web angle β was found to be preferably -15° to +15°.

A discontinuous coating of lathering surfactant (and other optional ingredients) can also be achieved by applying the liquid composition comprising the lathering surfactant with the non-impact printing technique disclosed in US 2004/0131842 or other suitable techniques. In the alternative, the discontinuous application of the lathering surfactant is accomplished by an intermittent supply of the liquid composition onto the tissue paper web, the frequency of the supply being synchronized with the movement of the tissue paper web. This way, a desired pattern of the lathering surfactant can be created on the tissue paper web.

The aqueous composition to be applied to the tissue web preferably comprises of from 0.5 to 60 wt.-% of one or more lathering surfactants and optionally from 0.5 to 50 wt.-% of water binding agent, preferably one or more polyhydric alcohols. More preferably, the lathering surfactant content is from 5 to 50 wt.-%, in particular 10 to 40 wt.-%, for instance 15 to 35 wt.-%. More preferred contents of water-binding agent range from 2 to 40 and 5 to 30 wt.-% (for instance 7 to 20 or 10 to 15 wt.-%).

The aqueous composition may also contain other minor components, for instance dyes, perfume or fragrance, for instance those disclosed in par. [0074] of US 2004/0031107, or antimicrobial agents, for instance those described in par. [0060] to [0065] of US 2004/0031107. Dyes are preferably water-soluble and can be used for purely aesthetic reasons to make visible a pattern of deposits of lathering surfactant, but also to indicate to the user which surface of the tissue paper product carries the lathering surfactant. These minor components are preferably employed in amounts of not more than 5, in particular not more than 1 wt.-%. The excellent cleaning effect of the paper tissue product of the invention can however be achieved without antimicrobial agents. The aqueous composition preferably does not contain any hydrophobic oils or waxes as used for instance in polishing wipes since these may counteract the cleaning effect.

The aqueous composition preferably has a viscosity ranging from 0.01 to 0.15 Pa x sec at a temperature of 23°C (using a Haake rheometer of type Rheostress 1 equipped with a measuring madrel (cone mandrel) C35/2°). Depending on the viscosity of the surfactant-containing fluid at the application temperature a suitable application temperature can be selected. Aqueous solutions of lathering surfactant with an optional content of water-binding agent are preferably applied at room temperature or temperatures close thereto, for instance at 10 to 30°C, typically 15 to 25°C.

The above aqueous composition is preferably applied to at least one side of single- or multi-ply tissue web in an amount of 0.1 to 5 g/m², more preferably 0.3 to 3 g/m², in particular 0.5 to 2 g/m².

The tissue paper web to be treated with a lathering surfactant can be made in line with methods known in the art. Such methods comprise the following process steps.
a. providing a paper making slurry,
b. forming that includes the headbox and the wire section,
c. optionally the press section (which is not required for TAD processes)
d. the drying portion (TAD (through air drying) and/or conventional drying on the Yankee cylinder) which also usually includes the crepe process essential for tissues having an "outer" creping,
e. optionally the monitoring and winding area.

Paper can be formed by placing the fibres, in an oriented or random manner, on one or between two continuously revolving wires of a paper making machine while simultaneously removing the main quantity of water of dilution until dry-solids contents of usually between 8 and 35 % are obtained.

Once the furnish is deposited on one or between two forming wires, or between a wire and a felt, the formed fibre-network is referred to as a web. The web is for example dewatered by centrifugal, pressing and vacuum forces. Also application of thermal energy in order to enhance dewatering could be used. Typically but not limiting, the web is transferred to a pressing felt, where the web is pressed, followed by drying at elevated temperature. Other transportation means, such as coarse fabrics or wires could be used as well. The particular techniques and typical equipment for making webs according to the process just described are well known to those skilled in the art. In a typical process, a low consistency pulp furnish is provided in a pressurized headbox. The headbox has an opening slice for delivering a thin deposit of pulp furnish onto the forming wire to form a wet web. The web is then typically dewatered to a fibre consistency of between about 8% and about 35% (total web weight basis) by vacuum dewatering and further dewatered by pressing operations wherein the web is subjected to pressure developed by opposing mechanical members, for example, cylindrical rolls.

Drying the formed primary fibrous web occurs in one or more steps by mechanical and thermal means until a final dry-solids content of usually about 93 to 98 %. In the case of tissue making, this stage is followed by the crepe process which crucially influences the properties of the finished tissue product in conventional processes. The conventional dry crepe process ("outer creping") involves creping on a usually 4.5 to 6 m diameter drying cylinder, the so-called Yankee cylinder, by means of a creping doctor blade with the aforementioned final dry-solids content of the raw tissue paper (wet creping can be used if lower demands are made of the tissue quality). The creped, finally dry raw tissue paper (raw tissue) is then available for further processing into the tissue paper product according to the invention.

Instead of the conventional tissue making process described above, the invention gives preference to the use of a modified technique in which an improvement in specific volume is achieved by a special kind of drying within process section (c) and in this way an improvement in the bulk softness of the thus made tissue paper is achieved. This process, which exists in a variety of subtypes, is termed the TAD (through air drying) technique. It is characterized by the fact that the "primary" fibrous web that leaves the sheet making stage is pre-dried to a dry-solids content of e.g. about 60 to 80% before final contact drying on the Yankee cylinder by blowing hot air through the fibrous web. Lower dry-solid contents of 30 to 60 % before the Yankee dryer are also feasible. The fibrous web is supported by an air-permeable wire or belt and during its transport is guided over the surface of an air-permeable rotating cylinder drum. The additional application of mechanical pressing by increased wire tension could be used in order to increase drying efficiency. Structuring the supporting wire or belt makes it possible to produce any pattern of compressed zones broken up by deformation in the moist state, resulting in increased mean specific volumes and consequently leading to an increase in bulk softness without decisively decreasing the strength of the fibrous web. Such a pattern is fixed in the area of the TAD-cylinder. Thereafter the pattern is further imprinted between the TAD-fabric and the Yankee-cylinder. The TAD process may also be used to provide the tissue paper product of the invention with watermarks.

Creping ("inner creping") may be conducted also during transfer of the paper sheet from the forming wire directly to the TAD-fabric or via a transfer fabric. For this creping the forming fabric runs faster than the following fabric receiving the sheet (rush transfer). For example, when applying the TAD technique for the production of raw tissue and the usual double-screen sheet formation in c-wrap configuration, for example, the so-called inner sheet-forming screen can thus be operated at a speed that is up to 40% faster than that of the next fabric or that of the subsequent felt, the initially formed and already pre-drained paper web being transferred to the next TAD fabric. This causes the still moist and as a result plastically deformable paper web to be internally broken up by compression and shearing, thereby rendering it more stretchable under load than a paper that has undergone neither "inner" nor outer creping. This transfer of still plastically deformable paper web at a differential speed that simultaneously takes effect may also be brought about in other embodiments between a transfer fabric and the so-called TAD imprinting fabric or between two transfer fabrics.

Another possible influence on the softness and strength of the raw tissue lies in the production of a layering in which the primary fibrous web to be formed is built up by a specially constructed headbox in the form of physically different layers of fibrous material, these layers being jointly supplied as a pulp strand to the sheet making stage. When processing ("converting") the raw fibrous web or raw tissue paper into the final product, the following procedural steps are normally used individually or in combination: cutting to size (longitudinally and/or cross cutting), producing a plurality of plies, producing chemical and/or mechanical (e.g. by embossing) ply adhesion, volumetric and structural embossing, folding, imprinting, perforating, smoothing, stacking, rolling up.

To produce multi-ply tissue paper products, such as towels or kitchen towels, an intermediate step preferably occurs with so-called doubling in which the raw tissue in the finished product's desired number of plies is usually gathered on a common multiply master roll.

The processing step from the raw tissue that has already been optionally wound up in several plies to the finished tissue product occurs in processing machines which include operations such as repeated smoothing of the tissue, edge embossing, to an extent combined with full area and/or local application of adhesive to produce ply adhesion of the individual plies (raw tissue) to be combined together, as well as longitudinal cut, folding, cross cut, placement and bringing together a plurality of individual tissues and their packaging as well as bringing them together to form larger surrounding packaging or bundles. The individual paper ply webs can also be pre-embossed (micro and macroembossing) and then combined in a roll gap according to the foot-to-foot, foot-to-ground or nested methods. Decor embossing or spot embossing is also possible.

These converting techniques are known in the art.

In accordance with the present invention it is preferred to apply the lathering surfactant to the tissue paper web within the converting line (in-line). However, the lathering surfactant can likewise be applied in a separate production step (off-line).

The present invention also relates to the use of a tissue paper product which feels dry to the touch and comprises a lathering surfactant for cleaning hard surfaces. For the purpose of the present specification, a "hard surface" is intended to mean any surface commonly referred to as hard other than the human skin. The tissue paper product used for this purpose preferably shows the characteristics stated before and in the appended claims. The tissue paper product of the invention is suitable to clean all different types of hard surfaces for instance furniture, kitchen appliance, wall material (e.g. tiles), floor material, doors, electric appliance, reflecting surfaces (e.g. mirror, window), bathtubs, sinks, toilets, dishes, outer and inner areas of a car, bicycles, motorbikes, lab equipment, shoes, glasses etc. As will be appreciated, the application field of the tissue paper product of the invention is manifold, and it can for example be used at home, in hospitals, restaurants and public toilets.

The present invention also relates to a process for cleaning a hard surface, preferably the aforementioned ones, said process comprising the steps of wetting the tissue paper product of the present invention with water and wiping over the hard surface.

### Examples

The following test methods were used to evaluate the tissue papers produced. The test samples were conditioned over 12 hours at 50% relative humidity and 23 °C prior to testing.

### 3-1: Basis weight

The basis weight was determined according to DIN EN 12625-6.

### 3.2. Thickness

The measurement is made by a precision micrometer (precision 0.001mm) according to a modified method based on EN 12625, part 3. For this purpose, the distance created by a sample between a fixed reference plate and a parallel pressure foot is measured. The diameter of the pressure foot is 35.7 ± 0.1 mm (10.0 cm² nominal area). The pressure applied is 2.0 kPa ± 0.1 kPa. The pressure foot is movable at a speed rate of 2.0 ± 0.2 mm/s.

A usable apparatus is a thickness meter type L & W 51D20 (available from Lorentzen & Wettre, US).

The paper to be measured, i.e. two sheets of a single-ply or multi-ply paper are cut into pieces having a diameter in accordance with the standard EN 12625, part 3, *i.e.* a diameter of above 80 mm, (*e.g*., pieces of sizes of 10 x 10 cm) and conditioned in an atmosphere of 23°C, 50 % RH (Relative Humidity) for at least 18 hours.

During measurement the sheets are placed beneath the pressure plate which is then lowered. The thickness value for the sheet is then read off 5 sec after the pressure value has stabilised. The thickness measurement is then repeated four times with further samples treated in the same manner.

The mean value of the 5 values obtained is taken as thickness of the two sheets measured.

### 3.3. Wet tensile strength in N/m (MD or CD)

The wet strength was determined according to prEN ISO/FDIS 12625-5:2001(E) Tissue Paper and Tissue Products, Part 5: determination of wet tensile strength (CEN TC 172).

To ensure that the wet strength of the samples has fully developed, the samples to be tested were always artificially aged before conducting the tensile test. Aging was effected by heating the samples in an air-circulating drying cabinet to (105 ±2) °C for a period of 15 min.

### 3.4. Freeness value

The freeness value (in °SR) was measured according to DIN-ISO 5267/1 of March 1999 corresponding to EN-ISO 5267/1 of July 2000.

### 3.5. Dry weight.

The dry weight was determined according to DIN EN 20638 Pulp: determination of the dry-solids content (ISO 638: 1978); German version EN 20638:1993.

Hereinafter weight proportions ("Kg/t") always refer to the amount of treated cellulosic fibres (dry weight).

### Reference example

A tissue paper web was manufactured in a TAD paper machine from 100% Celest pulp (manufactured by SCA Östrand) having a freeness value of about 21°SR to which a wet strength agent (type Giluton 1100/37 N, distributed by BK Giulini of Ludwigshafen, Germany) had been added in an amount of 12 kg/t active content.

A three-ply tissue web was produced by overlaying three of these TAD tissue paper webs having each a basis weight of about 20 g/m² followed by an embossing and gluing step in a conventional embossing station to join the webs under formation of so-called nested embossments. A PVA (polyvinyl alcohol) glue was used as an adhesive.

In a converting line the three-ply web was perforated, cut to size and wound to a roll of tissue paper of household towel grade wherein the individual sheets had a size of 24.6 x 26.1 cm, a basis weight of 60.5 g/m², a thickness of 753.0 µm, a wet tensile strength (MD) of 322.0 N/m and a wet tensile strength (CD) of 174.8 N/m.

### Example 1

By means of an application station as shown in figure 3, 1.0 g/m² Lumorol^{®} K 5240 (aqueous solution of sodium laureth sulfate, disodium laureth sulfosuccinate, cocoamidopropylbetain, PEG-9 cocoglycerides, active content about 66 wt.-%, water content 34 wt-%, available from Zschimmer & Schwarz) was applied to one side of the three ply web described in reference example 1.

The slot die applicator used was BC62 porous coat^{®} from Nordson Co., US. The application parameters shown in figure 3 were as follows. Δ₁ = 10 mm (below the roll), Δ₂ = 1,0 mm, α = 12°, β = 10°. The production speed was 200 m/min.

The resulting tissue paper product was evaluated in the same manner as reference example and had the characteristics shown hereinafter in table 1.

**Table 1**

| | Ref. Example | Example 1 |
|---|---|---|
| Coating amount (g/m²) | --- | 1.00 |
| Thickness (µm) | 753 | 770 |
| Wet tensile strength (MD) (N/m) | 322.0 | 308.1 |
| Wet tensile strength (CD) (N/m) | 174.8 | 198.5 |

These results indicate that the application of relatively minor amounts of lathering surfactants based on Lumorol^{®} K 5240 surprisingly may contribute in a positive fashion to thickness while wet tensile strength is essentially maintained or even slightly improved.

### Example 2

Example 1 was repeated with the sole difference that instead of 1.0g of Lumorol^{®} K 5240, 1.0g of Lumorol^{®} K 4339 from Zschimmer & Schwarz was applied onto the three-ply tissue paper. Lumorol^{®} K 4339 is based on an aqueous solution of sodium C₁₀-C₁₃ alkyl benzene sulfonate, fatty alcohol ether sulfate, fatty alcohol ethoxylate and fatty acid diethanolamide (active content about 51 wt-% , water content about 49 wt.-%).

### Example 3

Example 1 was repeated with the sole difference that instead of 1.0g of Lumorol^{®} K 5240, 3.0 g of Spülflott^{®} from Tillmann GmbH was applied onto the three-ply tissue paper. Spülflott^{®} is an aqueous solution of sodium C₁₀-C₁₆-alkylethoxylate sulfuric acid, cocoamidopropylbetain and citric acid with an active content of approximately 20 wt-%.

### Example 4

Moreover, the cleaning efficiency of a tissue paper products being coated with a cleaning substance according to Examples 1 to 3 was evaluated in the following cleansing tests.

The surface of a mirror having a size of 400 × 500 mm was evenly coated with a thin layer of sunflower oil using an amount of 5 to 10 ml of the oil.

Tests A₁, A₂ and A₃ (for Examples 1, 2 and 3) : Then sufficient water was added to the coated side of the tissue paper product to fully wet the same. This side was drawn under slight pressure by hand slowly and evenly over one part of the mirror surface.

Tests B₁, B₂ and B₃ (for Examples 1, 2 and 3): Tests A₁, A₂ and A₃ were repeated with the sole difference that the tissue paper web was doubled before another part of the mirror surface was cleaned in the same manner as in Tests A₁, A₂ and A₃.

Tests C₁, C₂ and C₃ (for Examples 1, 2 and 3): Sufficient water was added to the uncoated side of the tissue paper product to fully wet the same. This side was used for cleaning another part of the mirror surface in the same manner as in Tests A₁, A₂ and A₃.

Test R: Sufficient water was added to one side of an uncoated tissue paper product similar to the one described in the Reference Example to fully wet the same. This product was used for cleaning one further part of the mirror surface in the same manner as in Tests A₁, A₂ and A₃.

The cleaning efficiency was visually evaluated. Tests A₁, A₂ and A₃, B₁, B₂ and B₃ and C₁, C₂ and C₃ showed a much greater cleaning effect than Test R where remainders of the oil were clearly visible. Moreover, tests A₁, A₂ and A₃ and B₁, B₂ and B₃ produced hardly any streaks.

## Claims

1. A disposable tissue paper product which feels dry to the touch and comprises a lathering surfactant in a form capable of forming lather upon contact with water,
wherein
said tissue paper product is obtainable by applying said lathering surfactant or a composition containing the lathering surfactant to one or more plies of dry tissue paper web,
the lathering surfactant is present in an amount of 0.01 to 6 g/m², and,
if a composition containing the lathering surfactant is applied, the total amount of non-volatile components of said composition does not exceed 20 wt.-% of the dry weight of said one or more tissue paper plies,
wherein one or more tissue paper plies of the tissue paper product were subjected to a through air drying (TAD) step,
and wherein said tissue paper product has two or more tissue paper plies.

2. Tissue paper product according to claim 1, wherein each of said two or more tissue paper plies has a total basis weight of 10 to 75 g/m².

3. Tissue paper product according to claim 1 or 2 wherein two or more plies are joined with each other through mechanical or chemical means, and optionally the application of adhesive between said plies.

4. Tissue paper product according to any of claims 1 to 3 wherein said two or more plies comprise a wet strength agent.

5. Tissue paper product according to any of claims 1 to 4 wherein one or more lathering surfactants are present in an amount of 0.01 to 3 g/m².

6. Tissue paper product according to any of claims 1 to 5 wherein the lathering surfactant is selected from anionic lathering surfactants, amphoteric lathering surfactants, non-ionic lathering surfactants and mixtures thereof.

7. Tissue paper product according to claim 6 wherein the lathering surfactant is a non-ionic surfactant which is selected from amine oxides, alkylglucosides, alkylpolyglucosides, polyhydroxy fatty acid amides, alkoxylated mono- and di-fatty acid esters, alkoxylated fatty alcohols, alkoxylated alkylphenols, fatty acid monoglycerides, polyoxyethylene sorbitan, lathering sucrose esters and mixtures thereof, with amine oxide surfactants being preferred.

8. Tissue paper product according to any of claims 1 to 7 wherein the tissue product also comprises a water-binding agent, in particular a polyhydric alcohol.

9. Tissue paper product according to claim 8 wherein the weight ratio of water-binding agent(s)/lathering surfactant(s) is from 1/2 to 1/10.

10. Tissue paper product according to any of claims 1 to 9 wherein said tissue product is obtainable by applying an aqueous composition comprising the lathering surfactant, preferably one as defined in claim 6 or 7 and optionally a water-binding agent as defined in Claim 8.

11. Tissue paper product according to any of claims 1 to 10 wherein the lathering surfactant is present discontinuously on at least one surface of the product, preferably in the form of discrete deposits.

12. Tissue paper product according to any of claims 1 to 11 wherein the water content is less than 10 wt.-%.

13. Tissue paper product according to any of claims 1 to 12 provided in the form of rolls, piles, stacks or bricks of folded or unfolded sheets.

14. Tissue paper product according to any of claims 1, 2, 3, 4, 5, 6, 11, 12 and 13 which comprises a mixture of anionic and amphoteric lathering surfactants.

15. Tissue paper product according to claim 14 obtainable by applying an aqueous solution (A) comprising a mixture of at least one anionic lathering surfactant and at least one amphoteric lathering surfactant, wherein preferably the anionic surfactant is selected from alkyl ether sulfates and the amphoteric surfactant from betaines.

16. Tissue paper product according to claim 14 obtainable by applying an aqueous solution (C) comprising a mixture of at least two anionic lathering surfactants and at least one amphoteric lathering surfactant, wherein preferably one anionic surfactant is selected from alkyl ether sulfates, the other one from sulfosuccinates having a twofold negative charge and the amphoteric surfactant from betaines.

17. Tissue paper product according to any of claims 1, 2, 3, 4, 5, 6, 11, 12 and 13 which comprises a mixture of anionic and nonionic lathering surfactants.

18. Tissue paper product according to claim 17 obtainable by applying an aqueous solution (B) comprising a mixture of at least one anionic lathering surfactant and at least one nonionic lathering surfactant, wherein preferably the anionic surfactant is selected from alkylbenzene sulfates, alkyl ether sulfates and mixtures thereof, and the nonionic surfactant from fatty alcohol ethoxylates, N-hydroxy alkyl fatty acid amides and mixtures thereof.

19. Process for the manufacture of a disposable tissue paper product as defined in any of claims 1 to 18 comprising the step of applying a lathering surfactant or a composition containing the same to at least one surface of one or more plies of a dry tissue paper web.

20. Process according to claim 19 wherein a liquid composition comprising a lathering surfactant is applied to a moving tissue paper web (1) by means of an application device (2) comprising a slot die (9).

21. Process according to claim 19 or 20 wherein the lathering surfactant is applied discontinuously, preferably in the form of discrete deposits.

22. Process according to claim 20, wherein the liquid composition is an aqueous composition, which preferably comprises from 0.5 to 60 wt.-% of lathering surfactant and optionally from 0.5 to 50 wt.-% of water-binding agent, in particular polyhydric alcohol.

23. Process according to claim 22 wherein the aqueous composition has a viscosity of from 0.01 to 0.15 Pa·s at a temperature of 23°C.

24. Process according to any of claims 20 to 23 wherein a drying device (4, 4') is provided downstream of the application device (2) comprising a slot die (9).

25. Use of a tissue paper product as defined in any of claims 1 to 18 for cleaning hard surfaces, which are preferably selected from furniture, kitchen appliance, wall material, floor material, doors, electric appliance, reflecting surfaces, bathtubs, sinks, toilets, dishes, outer and inner areas of a car, bicycles, motorbikes and lab equipment.

26. Process for cleaning a hard surface comprising the steps of wetting the tissue paper product of any of claims 1 to 18 with water and wiping over the hard surface.

## Patentansprüche

1. Einweg-Tissuepapiererzeugnis, das sich bei Berührung trocken anfühlt und ein schäumendes Tensid in einer Form umfasst, die dazu fähig ist, bei Kontakt mit Wasser einen Schaum zu bilden, wobei
das Tissuepapiererzeugnis durch Aufbringen des schäumenden Tensids oder einer Zusammensetzung, die das schäumende Tensid umfasst, auf eine oder mehrere Lagen eines trockenen Tissuepapiergewebes erhältlich ist,
das schäumende Tensid in einer Menge von 0,01 bis 6 g/m² vorliegt, und
wenn die das schäumende Tensid enthaltende Zusammensetzung aufgebracht ist, die Gesamtmenge an nicht-flüchtigen Komponenten der Zusammensetzung 20 Gew.% des Trockengewichts der einen oder mehreren Tissuepapierlagen nicht übersteigt,
wobei eine oder mehrere Tissuepapierlagen des Tissuepapiererzeugnisses einem Luftdurchströmtrocknungs (TAD)-Schritt unterzogen wurden,
und wobei das Tissuepapiererzeugnis zwei oder mehr Tissuepapierlagen aufweist.

2. Tissuepapiererzeugnis gemäss Anspruch 1, wobei jede der zwei oder mehr Tissuepapierlagen ein Gesamtflächengewicht von 10 bis 75 g/m² aufweist.

3. Tissuepapiererzeugnis gemäss Anspruch 1 oder 2, wobei zwei oder mehr Lagen durch mechanische oder chemische Mittel miteinander verbunden sind, und gegebenenfalls durch das Aufbringen eines Haftmittels zwischen den Lagen.

4. Tissuepapiererzeugnis gemäss irgendeinem der Ansprüche 1 bis 3, wobei die zwei oder mehr Lagen ein Nassfestigkeitsmittel umfassen.

5. Tissuepapiererzeugnis gemäss irgendeinem der Ansprüche 1 bis 4, wobei ein oder mehrere schäumende Tenside in einer Menge von 0,01 bis 3 g/m² vorliegen.

6. Tissuepapiererzeugnis gemäss irgendeinem der Ansprüche 1 bis 5, wobei das schäumende Tensid aus anionischen schäumenden Tensiden, amphoteren schäumenden Tensiden, nicht-ionischen schäumenden Tensiden und Mischungen davon ausgewählt ist.

7. Tissuepapiererzeugnis gemäss Anspruch 6, wobei das schäumende Tensid ein nicht-ionisches Tensid ist, das aus Aminoxiden, Alkylglucosiden, Alkylpolyglucosiden, Polyhydroxy-Fettsäureamiden, alkoxylierten Mono- und Difettsäureestern, alkoxylierten Fettalkoholen, alkoxylierten Alkylphenolen, Fettsäuremonoglyceriden, Polyoxyethylensorbitan, schäumenden Saccharoseestern und Mischungen davon ausgewählt ist, wobei Aminoxidtenside bevorzugt sind.

8. Tissuepapiererzeugnis gemäss irgendeinem der Ansprüche 1 bis 7, wobei das Tissueerzeugnis ferner ein wasserbindendes Mittel, insbesondere einen mehrwertigen Alkohol, umfasst.

9. Tissuepapiererzeugnis gemäss Anspruch 8, wobei das Gewichtsverhältnis wasserbindende(s) Mittel(n)/schäumende(s) Tensid(e) 1/2 bis 1/10 beträgt.

10. Tissuepapiererzeugnis gemäss irgendeinem der Ansprüche 1 bis 9, wobei das Tissueerzeugnis durch Auftragen einer wässrigen, das schäumende Tensid umfassenden Zusammensetzung, vorzugsweise eines Tensids wie in Anspruch 6 oder 7 definiert, und gegebenenfalls eines wasserbindenden Mittels, wie in Anspruch 8 definiert, erhältlich ist.

11. Tissuepapiererzeugnis gemäss irgendeinem der Ansprüche 1 bis 10, wobei das schäumende Tensid auf zumindest einer Oberfläche des Erzeugnisses nichtkontinierlich, bevorzugt in Form von diskreten Abscheidungen, vorliegt.

12. Tissuepapiererzeugnis gemäss irgendeinem der Ansprüche 1 bis 11, wobei der Wassergehalt weniger als 10 Gew.% beträgt.

13. Tissuepapiererzeugnis gemäss irgendeinem der Ansprüche 1 bis 12, bereitgestellt in Form von Rollen, Stapeln, Packen oder Klötzen von gefalteten oder ungefalteten Blättern.

14. Tissuepapiererzeugnis gemäss irgendeinem der Ansprüche 1, 2, 3, 4, 5, 6, 11, 12 und 13, das eine Mischung von anionischen und amphoteren schäumenden Tensiden umfasst.

15. Tissuepapiererzeugnis gemäss Anspruch 14, das erhältlich ist durch Auftragen einer wässrigen Lösung (A), die eine Mischung von zumindest einem anionischen schäumenden Tensid und zumindest einem amphoteren schäumenden Tensid umfasst, wobei vorzugsweise das anionische Tensid aus Alkylethersulfaten und das amphotere Tensid aus Betainen ausgewählt wird.

16. Tissuepapiererzeugnis gemäss Anspruch 14, das erhältlich ist durch Auftragen einer wässrigen Lösung (C), die eine Mischung aus zumindest zwei anionischen schäumenden Tensiden und zumindest einem amphoteren schäumenden Tensid umfasst, wobei vorzugsweise ein anionisches Tensid aus Alkylethersulfaten, das andere aus Sulfosuccinaten mit zweifacher negativer Ladung und das amphotere Tensid aus Betainen ausgewählt ist.

17. Tissuepapiererzeugnis gemäss irgendeinem der Ansprüche 1, 2, 3, 4, 5, 6, 11, 12 und 13, das eine Mischung von anionischen und nicht-ionischen schäumenden Tensiden umfasst.

18. Tissuepapiererzeugnis gemäss Anspruch 17, das erhältlich ist durch Auftragen einer wässrigen Lösung (B), die eine Mischung von zumindest einem anionischen schäumenden Tensid und zumindest einem nicht-ionischen schäumenden Tensid umfasst, wobei vorzugsweise das anionische Tensid aus Alkylbenzolsulfaten, Alkylethersulfaten und Mischungen davon, und das nicht-ionische Tensid aus Fettalkoholethoxylaten, N-Hydroxyalkyl-Fettsäureamiden und Mischungen davon ausgewählt ist.

19. Verfahren zur Herstellung eines Einweg-Tissuepapiererzeugnisses wie in irgendeinem der Ansprüche 1 bis 18 definiert, das den Schritt des Auftragens des schäumenden Tensids oder einer Zusammensetzung, welche dieses enthält, auf zumindest eine Oberfläche einer oder mehrerer Lagen eines trockenen Tissuepapiergewebes umfasst.

20. Verfahren gemäss Anspruch 19, wobei eine flüssige Zusammensetzung, die das schäumende Tensid umfasst, auf ein sich bewegendes Tissuepapiergewebe (1) mit Hilfe einer Auftragungsvorrichtung (2), die eine Schlitzdüse (9) umfasst, aufgetragen wird.

21. Verfahren gemäss Anspruch 19 oder 20, wobei das schäumende Tensid nicht-kontinuierlich, vorzugsweise in Form von diskreten Abscheidungen, aufgetragen wird.

22. Verfahren gemäss Anspruch 20, wobei die flüssige Zusammensetzung eine wässrige Zusammensetzung ist, die vorzugsweise 0,5 bis 60 Gew.% eines schäumenden Tensids und gegebenenfalls 0,5 bis 50 Gew.% eines wasserbindenden Mittels, insbesondere mehrwertigen Alkohol, umfasst.

23. Verfahren gemäss Anspruch 22, wobei die wässrige Zusammensetzung eine Viskosität von 0,01 bis 0,15 Pa·s bei einer Temperatur von 23°C aufweist.

24. Verfahren gemäss irgendeinem der Ansprüche 20 bis 23, wobei die Trocknungsvorrichtung (4, 4') stromabwärts der Auftragungsvorrichtung (2), die eine Schlitzdüse (9) umfasst, bereitgestellt wird.

25. Verwendung eines Tissuepapiererzeugnisses wie in irgendeinem der Ansprüche 1 bis 18 definiert, zum Säubern harter Oberflächen, die bevorzugt aus Möbeln,
Küchengeräten, Wandmaterial, Bodenmaterial, Türen, elektrischen Geräten, reflektierenden Oberflächen, Badewannen, Waschbecken, Toiletten, Geschirr, äusseren und inneren Bereichen eines Autos, Fahrrädern, Motorrädern und Laborausstattung ausgewählt sind.

26. Verfahren zum Säubern einer harten Oberfläche, das die Schritte des Befeuchtens des Tissuepapiererzeugnisses gemäss irgendeinem der Ansprüche 1 bis 18 mit Wasser und Wischen über die harte Oberfläche umfasst.

## Revendications

1. Produit jetable en papier absorbant, qui est sec au toucher et comprend un tensioactif moussant sous une forme capable de former de la mousse au contact de l'eau,
lequel produit en papier absorbant est accessible par application dudit tensioactif moussant, ou d'une composition contenant ce tensioactif moussant, sur une ou plusieurs épaisseur(s) de bande de papier absorbant sec,
dans lequel produit le tensioactif moussant se trouve présent en une quantité de 0,01 à 6 g/m²
étant entendu que, si c'est une composition contenant le tensioactif moussant qui a été appliquée, la quantité totale de composants non-volatils dans cette composition ne représente pas plus de 20 % du poids à sec de ladite ou desdites épaisseur(s) de papier absorbant,
et qu'une ou plusieurs épaisseur(s) de papier absorbant du produit en papier absorbant a ou ont été soumise(s) à une étape de séchage effectuée au moyen d'air traversant (SAT),
et lequel produit en papier absorbant comporte deux épaisseurs de papier absorbant ou plus.

2. Produit en papier absorbant, conforme à la revendication 1, dans lequel chacune desdites épaisseurs de papier absorbant au nombre de deux ou plus présente un poids surfacique total de 10 à 75 g/m².

3. Produit en papier absorbant, conforme à la revendication 1 ou 2, dans lequel deux épaisseurs ou plus sont attachées l'une à l'autre ou les unes aux autres par des moyens mécaniques ou chimiques, ainsi que, en option, par application d'un adhésif entre lesdites épaisseurs.

4. Produit en papier absorbant, conforme à l'une des revendications 1 à 3, dans lequel lesdites épaisseurs au nombre de deux ou plus comprennent un agent de résistance à l'état humide.

5. Produit en papier absorbant, conforme à l'une des revendications 1 à 4, dans lequel il y a un ou plusieurs tensioactif(s) moussant(s), présent(s) en une quantité de 0,01 à 3 g/m².

6. Produit en papier absorbant, conforme à l'une des revendications 1 à 5, pour lequel le tensioactif moussant est choisi parmi les tensioactifs moussants anioniques, les tensioactifs moussants amphotères et les tensioactifs moussants non-ioniques, ainsi que les mélanges de tels tensioactifs.

7. Produit en papier absorbant, conforme à la revendication 6, dans lequel le tensioactif moussant est un tensioactif non-ionique qui est choisi parmi les suivants : oxydes d'amine, alkyl-glucosides, alkylpolyglucosides, amides d'acides gras polyhydroxylés, monoesters et diesters d'acide gras alcoxylés, alcools gras alcoxylés, alkyl-phénols alcoxylés, monoglycérides d'acide gras, produits de polyéthoxylation du sorbitane, et esters de saccharose moussants, ainsi que les mélanges de tels corps, la préférence étant accordée aux tensioactifs de type oxyde d'amine.

8. Produit en papier absorbant, conforme à l'une des revendications 1 à 7, lequel produit en papier absorbant contient aussi un agent de fixation de l'eau, en particulier un polyol.

9. Produit en papier absorbant, conforme à la revendication 8, dans lequel le rapport pondéral de l'agent ou des agents de fixation de l'eau au(x) tensioactif(s) moussants(s) vaut de 1/2 à 1/10.

10. Produit en papier absorbant, conforme à l'une des revendications 1 à 9, lequel produit en papier absorbant est accessible par application d'une composition aqueuse comprenant un tensioactif moussant, de préférence tel que défini dans la revendication 6 ou 7, et en option, un agent de fixation de l'eau, tel que défini dans la revendication 8.

11. Produit en papier absorbant, conforme à l'une des revendications 1 à 10, dans lequel le tensioactif moussant se trouve présent de façon discontinue, de préférence sous forme de dépôts discrets, sur au moins une surface du produit.

12. Produit en papier absorbant, conforme à l'une des revendications 1 à 11, dont la teneur en eau est inférieure à 10 % en poids.

13. Produit en papier absorbant, conforme à l'une des revendications 1 à 12, qui est fourni sous forme de rouleaux, de piles, de tas ou de briques de feuilles pliées ou non pliées.

14. Produit en papier absorbant, conforme à l'une des revendications 1, 2, 3, 4, 5, 6, 11, 12 et 13, qui comprend un mélange de tensioactifs moussants anionique(s) et amphotère(s).

15. Produit en papier absorbant, conforme à la revendication 14, accessible par application d'une solution aqueuse (A) contenant un mélange d'au moins un tensioactif moussant anionique et d'au moins un tensioactif moussant amphotère, pour lequel on a choisi, de préférence, le tensioactif anionique parmi les alkyl-éther-sulfates et le tensioactif amphotère parmi les bétaïnes.

16. Produit en papier absorbant, conforme à la revendication 14, accessible par application d'une solution aqueuse (C) contenant un mélange d'au moins deux tensioactifs moussants anioniques et d'au moins un tensioactif moussant amphotère, pour lequel on a choisi, de préférence, l'un des tensioactifs anioniques parmi les alkyl-éther-sulfates et l'autre parmi les sulfosuccinates porteurs d'une double charge négative, et le tensioactif amphotère parmi les bétaïnes.

17. Produit en papier absorbant, conforme à l'une des revendications 1, 2, 3, 4, 5, 6, 11, 12 et 13, qui comprend un mélange de tensioactifs moussants anionique(s) et non-ionique(s).

18. Produit en papier absorbant, conforme à la revendication 17, accessible par application d'une solution aqueuse (B) contenant un mélange d'au moins un tensioactif moussant anionique et d'au moins un tensioactif moussant non-ionique, pour lequel on a choisi, de préférence, le tensioactif anionique parmi les alkyl-benzène-sulfates et les alkyl-éther-sulfates, ainsi que leurs mélanges, et le tensioactif non-ionique parmi les alcools gras éthoxylés et les N-(hydroxy-alkyl)-amides d'acide gras, ainsi que leurs mélanges.

19. Procédé de fabrication d'un produit jetable en papier absorbant conforme à l'une des revendications 1 à 18, lequel procédé comporte une étape d'application d'un tensioactif moussant, ou d'une composition contenant un tel tensioactif, sur une ou plusieurs épaisseur(s) de bande de papier absorbant sec.

20. Procédé conforme à la revendication 19, dans lequel on applique une composition liquide contenant un tensioactif moussant sur une bande (1) de papier absorbant en mouvement, au moyen d'un dispositif d'application (2) qui comporte une filière plate (9).

21. Procédé conforme à la revendication 19 ou 20, dans lequel on applique le tensioactif moussant de façon discontinue, de préférence sous forme de dépôts discrets.

22. Procédé conforme à la revendication 20, dans lequel la composition liquide est une composition aqueuse qui contient de préférence de 0,5 à 60 % en poids de tensioactif moussant, et en option, de 0,5 à 50 % en poids d'un agent de fixation de l'eau, en particulier d'un polyol.

23. Procédé conforme à la revendication 22, dans lequel la composition aqueuse présente une viscosité de 0,01 à 0,15 Pa.s à la température de 23 °C.

24. Procédé conforme à l'une des revendications 20 à 23, dans lequel il y a un dispositif de séchage (4, 4') en aval du dispositif d'application (2) comportant une filière plate (9).

25. Utilisation d'un produit en papier absorbant, conforme à l'une des revendications 1 à 18, pour le nettoyage de surfaces dures appartenant à des objets choisis de préférence parmi des meubles, des appareils de cuisine, des matériaux muraux, des matériaux de sol, des portes, des appareils électriques, des surfaces réfléchissantes, des baignoires, des éviers ou lavabos, des toilettes, des assiettes ou plats, des surfaces extérieures ou intérieures de véhicule, des bicyclettes, des motos et des appareils de laboratoire.

26. Procédé de nettoyage d'une surface dure, comprenant des étapes qui consistent à mouiller avec de l'eau un produit en papier absorbant, conforme à l'une d'es revendications 1 à 18, et à le passer sur la surface dure.
